(19) Europäisches Patentamt
European Patent Office
Office européen des brevets

(11) **EP 4 633 093 A1**

(12) **EUROPEAN PATENT APPLICATION**
published in accordance with Art. 153(4) EPC

(43) Date of publication:
**15.10.2025 Bulletin 2025/42**

(21) Application number: **22967513.7**

(22) Date of filing: **06.12.2022**

(51) International Patent Classification (IPC):
**H04L 27/00** (2006.01)

(52) Cooperative Patent Classification (CPC):
**H04L 27/00**

(86) International application number:
**PCT/CN2022/136780**

(87) International publication number:
**WO 2024/119351 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **WANG, Shukun
Dongguan, Guangdong 523860 (CN)**
• **XU, Weijie
Dongguan, Guangdong 523860 (CN)**
• **SHI, Cong
Dongguan, Guangdong 523860 (CN)**

(74) Representative: **Grassi, Stefano
Bugnion S.p.A.
Viale Lancetti, 17
20158 Milano (IT)**

(54) **RANDOM ACCESS METHODS AND APPARATUSES, TERMINAL AND NETWORK DEVICE**

(57) Provided in the embodiments of the present application are random access methods and apparatuses, a terminal and a network device. A method comprises: a terminal receives a first signal sent by a network device, and, on the basis of the first signal, sends a second signal, the second signal being a backscatter signal of the first signal, the second signal carrying a first sequence and/or a first terminal identifier, the first terminal identifier being an identifier of the terminal, and the first sequence and/or the first terminal identifier being used for random access of the terminal.

A network device transmits a first signal, and the terminal receives the first signal from the network device — 100₁

The terminal transmits a second signal based on the first signal, the network device receives the second signal from the terminal, and the second signal is a back scattered signal of the first signal. The second signal carries a first sequence and/or a first terminal identifier, the first terminal identifier is an identifier of the terminal, and the first sequence and/or the first terminal identifier is used for random access procedure of the terminal — 100₂

**FIG. 10**

**Description**

TECHNICAL FIELD

Embodiments of this application relate to the technical field of mobile communication, and in particular to random access methods and apparatuses, a terminal and a network device.

BACKGROUND

In a back scattering communication system, a terminal receives a wireless signal from a network device, adds information to the wireless signal, and radiates it through the antenna. This process is called back scattering communication.

Currently, the terminals may only passively communicate with the network device. In some scenarios, the terminal needs to actively communicate with the network device, and how the terminal actively initiates the communication process needs to be specified.

SUMMARY

Embodiments of the disclosure provide random access methods and apparatuses, a terminal, a network device, a chip, a computer readable storage medium, a computer program product, and a computer program.

An embodiment of the disclosure provides a random access method, and the method includes the following operations.

A terminal receives a first signal from a network device, and transmits, based on the first signal, a second signal which is a back scattered signal of the first signal. The second signal carries a first sequence and/or a first terminal identifier, the first terminal identifier is an identifier of the terminal, and the first sequence and/or the first terminal identifier is used for random access procedure of the terminal.

An embodiment of the disclosure provides a random access method, and the method includes the following operations.

A network device transmits a first signal, and receives a second signal which is a back scattered signal of the first signal, from a terminal. The second signal carries a first sequence and/or a first terminal identifier, the first terminal identifier is an identifier of the terminal, and the first sequence and/or the first terminal identifier is used for random access procedure of the terminal.

An embodiment of the disclosure provides a random access apparatus. The random access apparatus is applied to a terminal and includes a communication unit.

The communication unit is configured to receive a first signal from a network device, and transmit, based on the first signal, a second signal which is a back scattered signal of the first signal. The second signal carries a first sequence and/or a first terminal identifier, the first terminal identifier is an identifier of the terminal, and the first sequence and/or the first terminal identifier is used for random access procedure of the terminal.

An embodiment of the disclosure provides a random access apparatus. The random access apparatus is applied to a network device, and includes a communication unit.

The communication unit is configured to transmit a first signal, and receive, a second signal which is a back scattered signal of the first signal, from a terminal. The second signal carries a first sequence and/or a first terminal identifier, the first terminal identifier is an identifier of the terminal, and the first sequence and/or the first terminal identifier is used for random access procedure of the terminal.

An embodiment of the disclosure provides a terminal, and the terminal device includes a processor and a memory. The memory is used to store a computer program, and the processor is used to invoke and execute the computer program stored in the memory to implement the random access method described above.

An embodiment of the disclosure provides a network device, and the network device includes a processor and a memory. The memory is used to store a computer program, and the processor is used to invoke and execute the computer program stored in the memory to implement the random access method described above.

There is provided a chip in an embodiment of the disclosure, and the chip is used to implement the random access method described above.

Specifically, the chip includes a processor, and the processor is used to invoke and execute a computer program from a memory to cause a device on which the chip is mounted to implement the random access method described above.

There is provided a computer-readable storage medium in an embodiment of the disclosure. The computer-readable storage medium having stored thereon a computer program that, when executed by a computer, causes the computer to implement the random access method described above.

There is provided a computer program product in an embodiment of the disclosure. The computer program product has stored therein computer program instructions that, when executed by a computer, cause the computer to implement the random access method described above.

There is provided a computer program in an embodiment of the disclosure. The computer program, when executed by a computer, causes the computer to implement the random access method described above.

According to the technical solutions in the embodiments of the disclosure, a random access method based on back scattering communication mechanism is proposed, in which the terminal initiates the communication process actively, so that the terminal can actively initiate the communication process under the back scattering communication mechanism.

BRIEF DESCRIPTION OF THE DRAWINGS

The accompanying drawings illustrated herein are intended to provide a further understanding of the disclosure and form part of the disclosure. The schematic embodiments of the disclosure and their description are intended to explain the disclosure, and do not constitute an unduly limiting of the disclosure. In the accompanying drawings:

FIG. 1 is a schematic diagram of zero power communication according to an embodiment of the disclosure.

FIG. 2 is a schematic diagram of power harvesting according to an embodiment of the disclosure.

FIG. 3 is a schematic diagram of back scattering communication according to an embodiment of the disclosure.

FIG. 4 is a schematic circuit diagram of resistive load modulation according to an embodiment of the disclosure.

FIG. 5 is a schematic illustration of non return zero coding according to an embodiment of the disclosure.

FIG. 6 is a schematic illustration of Manchester coding according to an embodiment of the disclosure.

FIG. 7 is a schematic illustration of unipolar return zero coding according to an embodiment of the disclosure.

FIG. 8 is a schematic illustration of differential bi-phase coding according to an embodiment of the disclosure.

FIG. 9 is a schematic illustration of Miller coding according to an embodiment of the disclosure.

FIG. 10 is a first schematic flowchart of a random access method according to an embodiment of the disclosure.

FIG. 11 is a second schematic flowchart of the random access method according to an embodiment of the disclosure.

FIG. 12 is a schematic illustration of back scattering occasion according to an embodiment of the disclosure.

FIG. 13 is a first schematic illustration of interaction between a terminal and a network device according to an embodiment of the disclosure.

FIG. 14 is a third schematic flowchart of the random access method according to an embodiment of the disclosure.

FIG. 15 is a second schematic illustration of interaction between a terminal and a network device according to an embodiment of the disclosure.

FIG. 16 is a fourth schematic flowchart of the random access method according to an embodiment of the disclosure.

FIG. 17 is a third schematic illustration of interaction between a terminal and a network device according to an embodiment of the disclosure.

FIG. 18 is a first schematic diagram of the compositional structure of a random access apparatus according to an embodiment of the disclosure.

FIG. 19 is a second schematic diagram of the compositional structure of the random access apparatus according to an embodiment of the disclosure.

FIG. 20 is a schematic structural illustration of a communication device according to an embodiment of the disclosure.

FIG. 21 is a schematic structural illustration of a chip according to an embodiment of the disclosure.

FIG. 22 is a schematic block diagram of a communication system according to an embodiment of the disclosure.

DETAILED DESCRIPTION

For convenience of understanding of technical solutions in the embodiments of the disclosure, the related technologies of the embodiments of the disclosure will be elaborated below. The following related technologies, as optional solutions, may be arbitrarily combined with the technical solutions in the embodiments of the disclosure, all of which belong to the scope of protection of the embodiments of the disclosure.

**Principle of zero power communication technology**

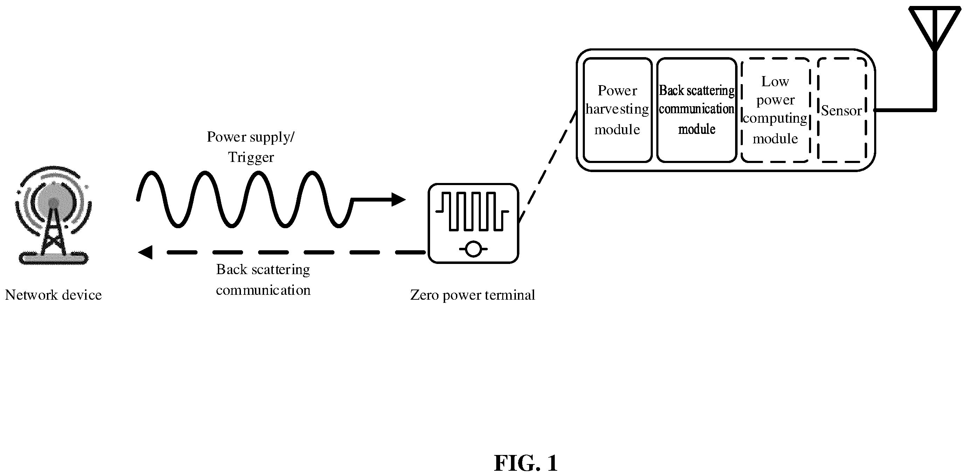

The zero power communication uses power harvesting and back scattering communication technologies. A zero power communication system includes a network device and a zero power terminal, as illustrated in FIG. 1. The network device is for transmitting, to the zero power terminal, a power supplying signal (that is, radio waves) and a downlink communication signal, and receives a back scattered signal from the zero power terminal. As an example, the zero power terminal includes a power harvesting module, a back scattering communication module, and a low power computing module. In addition, the zero power terminal may also be provided with a memory and/or a sensor, the memory is used to store some basic information (such as item identifier, etc.), and the sensor is used to acquire sensed data such as ambient temperature, ambient humidity, etc.

The key technologies of the zero power communication are further explained below.

**(1) Power harvesting**

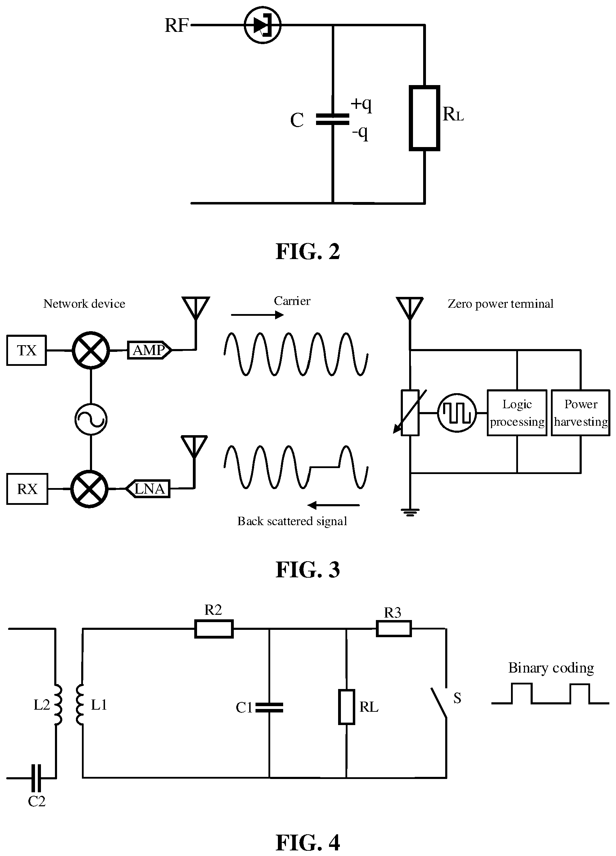

FIG. 2 is a schematic diagram of the power harvesting. As illustrated in FIG. 2, the power harvesting module harvests energy of electromagnetic waves in a space based on the electromagnetic induction principle, thereby obtaining the energy required to drive the zero power terminal, and realizing driving of a load circuit (such as driving the low power computing module, the sensor, etc.). Therefore, the zero power terminal does not require traditional batteries and realizes battery-free communication.

As an example, the power harvesting module is a radio frequency power harvesting module, and the radio frequency power harvesting module may harvest energy carried by radio waves in a space to realize the harvesting of electromagnetic wave energy in the space.

### (2) Back scattering communication

FIG. 3 is a schematic diagram of the back scattering communication. As illustrated in FIG. 3, the zero power terminal receives a wireless signal (that is, the carrier in FIG. 3) from the network device, modulates the wireless signal (that is, adds information to be transmitted to the wireless signal), and radiates the modulated signal through the antenna. This information transmission process is called the back scattering communication.

The back scattering communication is inherently tied to the functionality of load modulation, and the load modulation serves as a common method for the zero power terminal to add information. The load modulation implements the modulation process by altering the magnitude and/or phase of the impedance of the zero power terminal through adjusting and controlling circuit parameters of an oscillation loop of the zero power terminal based on the data stream timing. Load modulation technology mainly includes two methods: resistive load modulation and capacitive load modulation.

As illustrated in FIG. 4, in the resistive load modulation, the load is connected in parallel with a resistor, which is called a load modulation resistor. The resistor is switched on or off based on the control of the binary data stream. The switching the resistor on and off causes changes in the circuit voltage, thereby achieving amplitude shift keying (ASK) modulation, that is, the signal is modulated by adjusting the amplitude of the back scattered signal from the zero power terminal. Similarly, in the capacitive load modulation, the load is connected in parallel with a capacitor, which is called a load modulation capacitor. The capacitor replaces the load modulation resistor in FIG. 4. The resonance frequency of the circuit may be changed by switching the capacitor on and off, thereby achieving frequency shift keying (FSK), that is, the signal is modulated by adjusting the operating frequency of the back scattered signal from the zero power terminal.

It can be seen that the zero power terminal modulates the information of the incoming signal by means of the load modulation, thereby achieving the back scattering communication process. Therefore, the zero power terminal has significant advantages as follows. On one hand, the zero power terminal does not actively transmit signals, and therefore the zero power terminal does not require complex radio frequency chains, such as power amplifiers, radio frequency filters, etc. On the other hand, the zero power terminal does not need to actively generate high-frequency signals, and therefore the zero power terminal does not require a high-frequency crystal oscillator. Furthermore, the zero power terminal uses the back scattering communication, and its transmission process does not need to consume the energy of the zero power terminal itself.

### (3) Power supplying signal and trigger signal in a zero power communication system

**Power supplying signal**

The power supplying signal is used to supply power to a zero power device.

From the perspective of the carrier of the power supplying signal, the transmitting end of the power supplying signal may be a base station, a smart gateway, a charging station, a micro base station, a smart phone, etc.

From the perspective of the frequency band of the power supplying signal, the frequency band of radio waves used as the power supplying signal may be low frequency, intermediate frequency, high frequency, or the like.

From the perspective of the waveform of the power supplying signal, the waveform of the radio waves used as the power supplying signal may be a sine wave, a square wave, a triangular wave, a pulse wave, a rectangular wave, or the like.

Furthermore, the power supplying signal may be a continuous wave or a non-continuous wave (i.e., allowing interruption for a certain time).

The power supplying signal may be, but is not limited to, a certain physical signal specified in the 3GPP standard, such as sounding reference signal (SRS), physical uplink shared channel (PUSCH), physical random access channel (PRACH), physical uplink control channel (PUCCH), physical downlink control channel (PDCCH), physical downlink shared channel (PDSCH), physical broadcast channel (PBCH), and the like. Not limited to this, the power supplying signal may also be a new type of signal.

**Trigger signal**

The trigger signal is used to trigger the zero power device to communicate. In other words, the trigger signal is used to schedule the zero power device.

From the perspective of the carrier of the trigger signal, the transmitting terminal of the trigger signal may be a base station, a smart gateway, a charging station, a micro base station, a smart phone, etc.

From the perspective of the frequency band of the trigger signal, the frequency band of radio waves used as the trigger signal may be low frequency, intermediate frequency, high frequency, or the like.

From the perspective of the waveform of the trigger signal, the waveform of the radio waves used as the trigger signal may be a sine wave, a square wave, a triangular wave, a pulse wave, a rectangular wave, or the like.

Furthermore, the trigger signal may be a continuous wave or a non-continuous wave (i.e., allowing interruption for a certain time).

The trigger signal may be, but is not limited to, a certain physical signal specified in the 3GPP standard, such as SRS, PUSCH, PRACH, PUCCH, PDCCH, PDSCH, PBCH, and the like. Not limited to this, the trigger signal may also be a new type of signal.

**Coding method of zero power communication**

For data transmitted by the zero power terminal, different forms of codes may be used to indicate binary "1" and "0". Radio frequency identification systems typically use one of the following coding methods: non return zero (NRZ) coding, Manchester coding, unipolar return zero (RZ) coding, differential bi-phase (DBP) coding, Miller coding, and differential coding. Using different forms of codes to indicate binary "1" and "0" may also be understood as using different pulse signals to indicate "0" and "1". Several numbering methods will be described below.

(1) NRZ coding

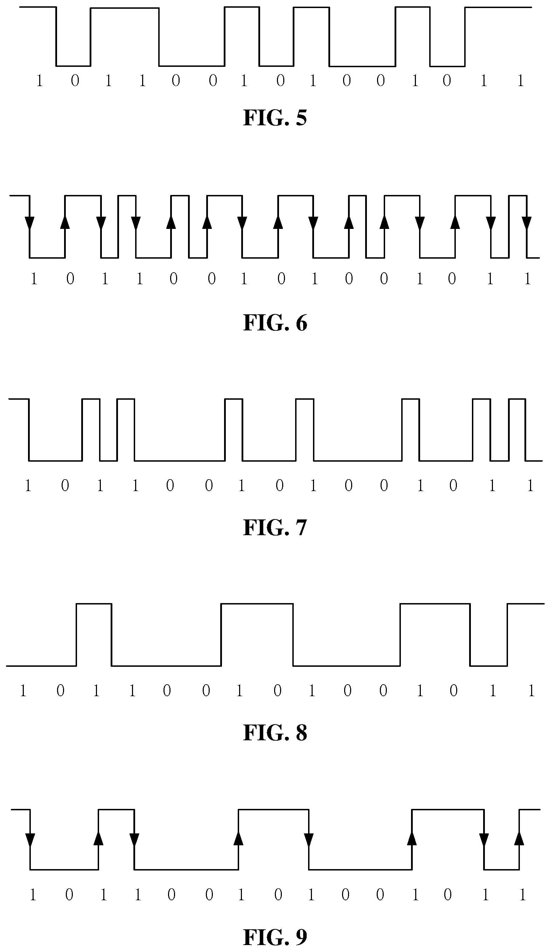

In the NRZ coding, a high level indicates binary "1", while a low level indicates binary "0", as illustrated in FIG. 5.

(2) Manchester coding

The Manchester coding is also known as the split-phase coding. In the Manchester coding, the value of a bit is indicated by the change in level (rising/falling) at a half of a bit period within the bit length. The negative jump at the half of the bit period indicates binary "1", while the positive jump at the half of the bit period indicates binary "0", as illustrated in FIG. 6.

The Manchester coding is usually used for data transmission from the zero power terminal to the network device when using load modulation or back scattering modulation of the carrier, because it is conducive to find errors in data transmission. This is because within the bit length, the state of "no change" is not allowed. When the data bits simultaneously transmitted by multiple zero power terminals have different values, the received rising edge and falling edge cancel each other out, resulting in an uninterrupted carrier signal throughout the entire bit length. Since this state is not allowed, the network device may determine the specific location where the collision occurs based on this error.

(3) Unipolar RZ coding

In the unipolar RZ coding, the high level within a first half bit period indicates binary "1", while the low level signal lasting for the entire bit period indicates binary "0", as illustrated in FIG. 7. The unipolar RZ coding may be used to extract bit synchronization signals.

(4) DBP coding

In the DBP coding, an arbitrary edge within half bit period indicates binary "0", while no edge indicates binary "1", as illustrated in FIG. 8. Furthermore, at the beginning of each bit period, the level is inverted. Therefore, for a receiving terminal, the bit timing is relatively easy to be reconstructed.

(5) Miller coding

In the Miller coding, an arbitrary edge within half bit period indicates binary "0", while an unchanged level through the next bit period indicates binary "0". A level alternation occurs at the beginning of the bit period, as illustrated in FIG. 9. Therefore, for a receiver, the bit timing is relatively easy to be reconstructed.

(6) Differential coding

In the differential coding, each binary "1" to be transmitted causes a change in signal level while for binary "0", the signal level remains unchanged.

**Classification of zero power terminals**

Based on the energy sources and usage manners of the zero power terminals, the zero power terminals may be classified into the following types.

(1) Passive zero power terminal

The zero power terminal does not require a built-in battery. When the zero power terminal approaches the network device, the zero power terminal is in the near-field range formed by the radiation of the antenna of the network device. Therefore, the antenna of the zero power terminal generates an induced current through electromagnetic induction, and the induced current drives the low power computing module (that is, the low power chip circuit) of the zero power terminal to operate, thereby realizing the demodulation of the forward link signal and the modulation of the backward link signal. For the back scattering link, the zero power terminal uses the back scattering implementation for signal transmission.

It can be seen that the passive zero power terminal does not require a built-in battery to drive neither the forward link nor the backward link, and thus, it is a real zero power terminal.

Since the passive zero power terminal does not require batteries, the RF circuit and baseband circuit of the passive zero power terminal are very simple. For example, the passive zero power terminal does not require a low noise amplifier (LNA), power amplifier (PA), crystal oscillator, ADC, etc., so it has many advantages such as small size, light weight, low price and long service life, etc.

(2) Semi-passive zero power terminal

The semi-passive zero power terminal itself is not equipped with a conventional battery, but it may use the power harvesting module to harvest energy of radio waves and store the harvested energy in an energy storage unit (such as a capacitor). After obtaining energy, the energy storage unit may drive the low power computing module (that is, the low power chip circuit) of the zero power terminal to operate, thereby realizing the demodulation of the forward link signal and the modulation of the backward link signal. For the back scattering link, the zero power terminal uses the back scattering implementation for signal transmission.

It can be seen that the semi-passive zero power terminal does not require a built-in battery to drive neither the forward link nor the backward link. Although the energy stored in the capacitor is used in the operation, the energy comes from the energy of radio waves harvested by the power harvesting module, and thus, the semi-passive zero power terminal is also a real zero power terminal.

The semi-passive zero power terminal inherits many advantages of the passive zero power terminal, so it has many advantages such as small size, light weight, low price and long service life, etc.

(3) Active zero power terminal

The zero power terminal used in some scenarios may also be an active zero power terminal, which has a built-in battery. The battery is used to drive the low power computing module (that is, the low power chip circuit) of the zero power terminal, thereby realizing the demodulation of the forward link signal and the modulation of the backward link signal. However, for the back scattering link, the zero power terminal uses the back scattering implementation for signal transmission. Therefore, the zero power of this type of terminal is mainly reflected in the fact that the signal transmission of the back scattering link does not require power from the terminal itself, but instead uses the back scattering manner.

The active zero power terminal has the built-in battery to supply power to radio frequency chip, so that communication distance is increased and communication reliability is improved. Therefore, it may be applied in some scenarios that have relatively high requirements in terms of communication distance and communication time-delay.

**Cellular passive Internet of Things (IoT)**

With the increase of industry applications, there are more and more types and application scenarios of connected objects, and there will be higher requirements in terms of the cost and power consumption of communication terminals. The application of battery-free and low-cost passive IoT devices has become the key technology of cellular IoT, thereby enriching the types and quantities of network-linked terminals and truly realizing the Internet of Everything. The passive IoT device may be based on zero power communication technologies, such as radio frequency identification (RFID) technology, and extend on this basis to be suitable for cellular IoT.

In the zero power communication system, the basic communication method between the terminal and the network device is the back scattering communication. The terminal receives a wireless signal from the network device, modulates the wireless signal to add information to be transmitted, and radiates the modulated signal through the antenna. This information transmission process is called back scattering communication. Based on the back scattering communication, the terminal needs a signal or information from the network device to trigger the transmission of information, so as to perform uplink communication. Therefore, it needs to be clarified how to handle the situation where the terminal actively initiates communication, that is, the terminal actively transmits information.

Therefore, the following technical solutions in embodiments of the disclosure are provided. In the back scattering communication system, the key factor for the terminal to actively communicate with the network device lies in the fact that the terminal needs to obtain a trigger signal from the network device. Furthermore, the terminal needs to obtain an occasion or resource for back scattering (referred to as back scattering occasion or back scattering resource). Considering these key factors, technical solutions in embodiments of the disclosure proposes a random access method based on back scattering communication mechanism, so that the terminal may actively initiate the communication process with the help of the random access method.

It should be noted that, technical solutions in embodiments of the disclosure are applied to the back scattering communication system. The back scattering communication systems include, but are not limited to: zero power communication systems, ambient powered IOT systems, passive IOT systems, etc.

It should be noted that the "terminal" described in the embodiments of the disclosure includes, but is not limited to: a zero power terminal, a passive IOT terminal, and an ambient powered IOT terminal. The terminal identifier includes, but is not limited to, a device identifier of the terminal, a cell-radio network temporary identifier (C-RNTI) of the terminal, a globally unique temporary UE identifier (GUTI) of the terminal, a virtual ID of the terminal, and the like.

It should be noted that the "network device" described in the embodiment of the disclosure may also be replaced with other devices.

For convenience of understanding of technical solutions in the embodiments of the disclosure, the technical solutions in the disclosure are described in detail by way of specific embodiments below. The above related technologies, as optional solutions, may be arbitrarily combined with the technical solutions in the embodiments of the disclosure, all of which belong to the scope of protection of the embodiments of the disclosure. The embodiments of the disclosure include at least part of the following contents.

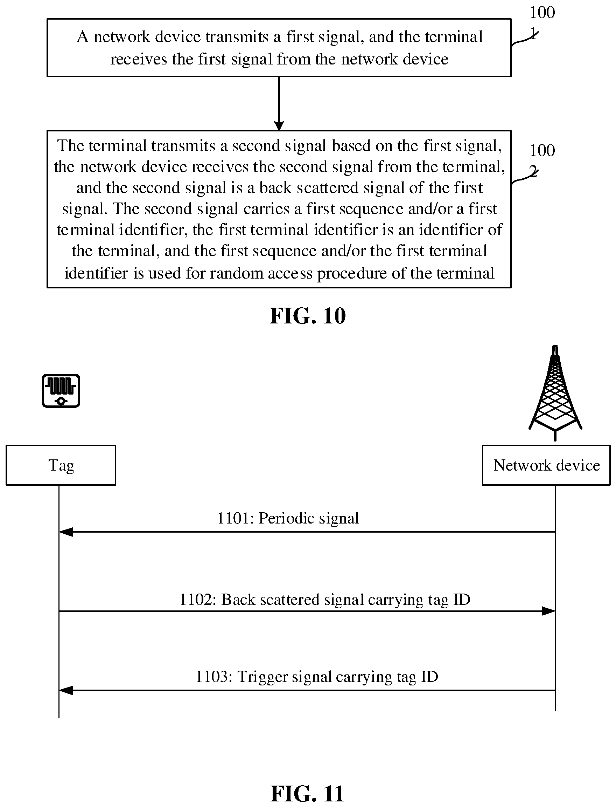

FIG. 10 is a schematic flowchart of a random access method provided in an embodiment of the disclosure. As illustrated in FIG. 10, the random access method includes the following operations.

In operation 1001, a network device transmits a first signal, and the terminal receives the first signal from the network device.

In operation 1002, the terminal transmits a second signal based on the first signal, and the network device receives the second signal from the terminal. The second signal is a back scattered signal of the first signal. The second signal carries a first sequence and/or a first terminal identifier, the first terminal identifier is an identifier of the terminal, and the first sequence and/or the first terminal identifier is used for random access procedure of the terminal.

In some implementations, the network device may be an access network device in communication with the terminal. The access network device may provide communication coverage for a particular area and perform communication with the terminal within the coverage area. The network device may be a base station, a wireless controller, a relay station, an access point, a vehicle-mounted device, a wearable device, a hub, a switch, a bridge, a router, or a network device in a future evolved public land mobile network (PLMN), etc.

In some implementations, the first signal is a periodic signal. The first signal is used to trigger a random access procedure, or the first signal may be used for the terminal to initiate an access procedure.

It should be noted that, unless otherwise specified, the "period" described in the embodiments of the disclosure is the period of the first signal.

In an embodiment of the disclosure, the random access procedure includes the following operations.

Operation I: the terminal receives a first signal from the network device.

Operation II: the terminal performs back scattering on the first signal, thereby transmitting a second signal, where the second signal is a back scattered signal of the first signal. The second signal carries a first sequence and/or a first terminal identifier.

Herein, the second signal may also carry a first sequence index and/or a first terminal identifier, and the first sequence index is an index of the first sequence.

The random access procedure is further described below depending on situations where the second signal carries different contents.

**Scheme 1**

The second signal carries the first terminal identifier. For this case, the random access procedure further includes the following operation.

Operation III:

case 1): when the terminal receives a first trigger signal carrying the first terminal identifier from the network device, it is determined that the random access procedure is successful, and/or uplink data is transmitted based on the first trigger signal, where a signal carrying the uplink data is a back scattered signal of the first trigger signal;
case 2): when the terminal does not receive the first trigger signal carrying the first terminal identifier from the network device, it is determined that the random access procedure fails, and/or the random access procedure is performed again.

In the above scheme, the operation that the random access procedure is performed again may be that: the second signal is retransmitted based on the first signal (that is, the first signal received in the current period); or the second signal is transmitted based on the first signal of a next period.

In some implementations, a random access resource used for performing again the random access procedure is reselected. Herein, the random access resource may be a sequence and/or a back scattering occasion.

For the network device, when the network device detects the first terminal identifier, the network device transmits the first trigger signal carrying the first terminal identifier. The network device receives the uplink data from the terminal, where the signal carrying the uplink data is a back scattered signal of the first trigger signal.

In some implementations, a timer corresponding to the first trigger signal is a first timer, and during operation of the first timer, the terminal listens to the first trigger signal and/or determines whether the first trigger signal is received. Herein, the first timer may also be understood as a listening timer corresponding to the first trigger signal.

Herein, a start time of the first timer is determined based on a time when the second signal is transmitted. For example, the start time of the first timer is the time when the second signal is transmitted. Alternatively, the start time of the first timer is determined based on a time when a first reference timer expires, and a start time of the first reference timer is determined based on a time when the first signal is received or the time when the second signal is transmitted. For example, the start time of the first timer is the time when the first reference timer expires, and the start time of the first reference timer is the time when the first signal is received or the time when the second signal is transmitted.

In some implementations, the first timer is configured by a system broadcast message or by the first signal.

In some implementations, the first trigger signal is transmitted after the second signal is received by the network device; or the first trigger signal is transmitted after a final back scattering occasion in a period.

Herein, manners through which the network device transmits the first trigger signal may include the following options.

Option 1): upon receiving the second signal, the network device transmits the first trigger signal either immediately or after a delay (a short period of time).

Option 2): upon receiving the second signal, the network device transmits the first trigger signal after a final back scattering occasion in a period.

In some implementations, the first trigger signal carries one terminal identifier; or the first trigger signal carries multiple terminal identifiers.

Herein, the first trigger signal may be terminal-specific. In this case, the first trigger signal carries one terminal identifier. Alternatively, the first trigger signal may be terminal-common. In this case, the first trigger signal carries one or more terminal identifiers.

**Scheme 2**

The second signal carries the first sequence. For this case, the random access procedure further includes the following operation.

Operation III:

case 1): when the terminal receives a second trigger signal carrying the first sequence or a first sequence index from the network device, the terminal transmits a third signal based on the second trigger signal, the third signal is a back scattered signal of the second trigger signal, the third signal carries the first terminal identifier, and the first sequence index is an index of the first sequence; furthermore, case 1-1): when the terminal receives a third trigger signal carrying the first terminal identifier from the network device, it is determined that the random access procedure is successful, and/or uplink data is transmitted based on the third trigger signal, where a signal carrying the uplink data is a back scattered signal of the third trigger signal; case 1-2): when the terminal does not receive the third trigger signal carrying the first terminal identifier from the network device, it is determined that the random access procedure fails, and/or the random access procedure is performed again;

case 2): when the terminal does not receive the second trigger signal carrying the first sequence or the first sequence index from the network device, it is determined that the random access procedure fails, and/or the random access procedure is performed again.

In the above scheme, the operation that the random access procedure is performed again may be that: the second signal is retransmitted based on the first signal (that is, the first signal received in the current period); or the second signal is transmitted based on the first signal of a next period.

In some implementations, a random access resource used for performing again the random access procedure is reselected. Herein, the random access resource may be a sequence and/or a back scattering occasion.

For the network device, when the network device detects the first sequence, the network device transmits the second trigger signal carrying the first sequence or the first sequence index, and the first sequence index is an index of the first sequence; the network device receives a third signal from the terminal, the third signal is a back scattered signal of the second trigger signal, and the third signal carries the first terminal identifier; when the network device detects the first terminal identifier, the network device transmits the third trigger signal carrying the first terminal identifier. The network device receives uplink data from the terminal, where the signal carrying the uplink data is a back scattered signal of the third trigger signal.

In some implementations, a timer corresponding to the second trigger signal is a second timer, and during operation of the second timer, the terminal listens to the second trigger signal and/or determines whether the second trigger signal is received. Herein, the second timer may also be understood as a listening timer corresponding to the second trigger signal.

Herein, a start time of the second timer is determined based on a time when the second signal is transmitted. For example, the start time of the second timer is the time when the second signal is transmitted. Alternatively, the start time of the second timer is determined based on a time when a first reference timer expires, and a start time of the first reference timer is determined based on a time when the first signal is received or the time when the second signal is transmitted. For example, the start time of the second timer is the time when the first reference timer expires, and the start time of the first reference timer is the time when the first signal is received or the time when the second signal is transmitted.

In some implementations, the second timer is configured by a system broadcast message or by the first signal.

In some implementations, the second trigger signal is transmitted after the second signal is received by the network device; or the second trigger signal is transmitted after a final back scattering occasion in a period.

Herein, manners through which the network device transmits the first trigger signal may include the following options.

Option 1): upon receiving the second signal, the network device transmits the second trigger signal either immediately or after a delay (a short period of time).

Option 2): upon receiving the second signal, the network device transmits the second trigger signal after a final back scattering occasion in a period.

In some implementations, the second trigger signal carries one sequence or one sequence index; or the second trigger signal carries multiple sequences or multiple sequence indexes.

Herein, the second trigger signal may be terminal-specific. In this case, the second trigger signal carries one sequence or one sequence index. Alternatively, the second trigger signal may be terminal-common. In this case, the second trigger signal carries one or more sequences or one or more sequence indexes.

It should be noted that, the listening timer corresponding to the second trigger signal may be the same as or different from the listening timer corresponding to the first trigger signal.

**Scheme 3**

The second signal carries the first sequence and the first terminal identifier. For this case, the random access procedure further includes the following operation.

Operation III:

case 1): when the terminal receives a first trigger signal carrying the first terminal identifier from the network device, it is determined that the random access procedure is successful, and/or uplink data is transmitted based on the first trigger signal, and a signal carrying the uplink data is a back scattered signal of the first trigger signal;

case 2): when the terminal receives a second trigger signal carrying the first sequence or a first sequence index from the network device, the terminal transmits a third signal based on the second trigger signal, where the third signal is a back scattered signal of the second trigger signal, the third signal carries the first terminal identifier, and the first sequence index is an index of the first sequence; furthermore, case 2-1): when the terminal receives a third trigger signal carrying the first terminal identifier from the network device, it is determined that the random access procedure is successful, and/or uplink data is transmitted based on the third trigger signal, where a signal carrying the uplink data is a back scattered signal of the third trigger signal; case 2-2): when the terminal does not receive the third trigger signal carrying the first terminal identifier from the network device, it is determined that the random access procedure fails, and/or the random access procedure is performed again;

case 3): when the terminal does not receive the first trigger signal carrying the first terminal identifier from the network device and does not receive the second trigger signal carrying the first sequence or the first sequence index from the network device, it is determined that the random access procedure fails, and/or the random access procedure is performed again.

In the above scheme, the operation that the random access procedure is performed again may be that: the second signal is retransmitted based on the first signal (that is, the first signal received in the current cycle); or the second signal is transmitted based on the first signal of a next period.

In some implementations, a random access resource used for performing again the random access procedure is reselected. Herein, the random access resource may be a sequence and/or a back scattering occasion.

For the network device, 1) when the network device detects the first terminal identifier, the network device transmits the first trigger signal carrying the first terminal identifier; the network device receives uplink data from the terminal, a signal carrying the uplink data is a back scattered signal of the first trigger signal. 2) When the network device does not detect the first terminal identifier but detects the first sequence, the network device transmits a second trigger signal carrying the first sequence or a first sequence index, where the first sequence index is an index of the first sequence; the network device receives a third signal from the terminal, the third signal is a back scattered signal of the second trigger signal, and the third signal carries the first terminal identifier; when the network device detects the first terminal identifier, the network device transmits the third trigger signal carrying the first terminal identifier, the network device receives uplink data from the terminal, where the signal carrying the uplink data is a back scattered signal of the third trigger signal.

It should be noted that, when the network device detects only the first sequence, the network device transmits the second trigger signal carrying the first sequence or a first sequence index. When the network device detects only the first terminal identifier, the network device transmits the first trigger signal carrying the first terminal identifier. When the network device detects the first sequence and the first terminal identifier, the network device transmits the first trigger signal carrying the first terminal identifier.

In some implementations, a timer corresponding to the first trigger signal is a first timer, and during operation of the first timer, the terminal listens to the first trigger signal and/or determines whether the first trigger signal is received. Herein, the first timer may also be understood as a listening timer corresponding to the first trigger signal.

Herein, a start time of the first timer is determined based on a time when the second signal is transmitted. For example, the start time of the first timer is the time when the second signal is transmitted. Alternatively, the start time of the first timer is determined based on a time when a first reference timer expires, and a start time of the first reference timer is determined based on a time when the first signal is received or the time when the second signal is transmitted. For example, the start time of the first timer is the time when the first reference timer expires, and the start time of the first reference timer is the time when the first signal is received or the time when the second signal is transmitted.

In some implementations, the first timer is configured by a system broadcast message or by the first signal.

In some implementations, the first trigger signal is transmitted after the second signal is received by the network device; or the first trigger signal is transmitted after a final back scattering occasion in a period.

Herein, manners through which the network device transmits the first trigger signal may include the following options.

Option 1): upon receiving the second signal, the network device transmits the first trigger signal either immediately or after a delay (a short period of time).

Option 2): upon receiving the second signal, the network device transmits the first trigger signal after a final back scattering occasion in a period.

In some implementations, the first trigger signal carries one terminal identifier; or the first trigger signal carries multiple terminal identifiers.

Herein, the first trigger signal may be terminal-specific. In this case, the first trigger signal carries one terminal identifier. Alternatively, the first trigger signal may be terminal-common. In this case, the first trigger signal carries one or more terminal identifiers.

In some implementations, a timer corresponding to the second trigger signal is a second timer, and during operation of the second timer, the terminal listens to the second trigger signal and/or determines whether the second trigger signal is received. Herein, the second timer may also be understood as a listening timer corresponding to the second trigger signal.

Herein, a start time of the second timer is determined based on a time when the second signal is transmitted. For example, the start time of the second timer is the time when the second signal is transmitted. Alternatively, the start time of the second timer is determined based on a time when a first reference timer expires, and a start time of the first reference timer is determined based on a time when the first signal is received or the time when the second signal is transmitted. For example, the start time of the second timer is the time when a first reference timer expires, and the start time of the first reference timer is the time when the first signal is received or the time when the second signal is transmitted.

In some implementations, the second timer is configured by a system broadcast message or by the first signal.

In some implementations, the second trigger signal is transmitted after the second signal is received by the network device; or the second trigger signal is transmitted after a final back scattering occasion in a period.

Herein, manners through which the network device transmits the first trigger signal may include the following options.

Option 1): upon receiving the second signal, the network device transmits the second trigger signal either immediately or after a delay (a short period of time).

Option 2): upon receiving the second signal, the network device transmits the second trigger signal after a final back scattering occasion in a period.

In some implementations, the second trigger signal carries one sequence or one sequence index; or the second trigger signal carries multiple sequences or multiple sequence indexes.

Herein, the second trigger signal may be terminal-specific. In this case, the second trigger signal carries one sequence or one sequence index. Alternatively, the second trigger signal may be terminal-common. In this case, the second trigger signal carries one or more sequences or one or more sequence indexes.

It should be noted that, the listening timer corresponding to the second trigger signal may be the same as or different from the listening timer corresponding to the first trigger signal.

In some implementations, a timer corresponding to the third trigger signal is a third timer, and during operation of the third timer, the terminal listens to the third trigger signal and/or determines whether the third trigger signal is received. Herein, the third timer may also be understood as a listening timer corresponding to the third trigger signal.

Herein, a start time of the third timer is determined based on a time when the third signal is transmitted. For example, the start time of the third timer is the time when the third signal is transmitted. Alternatively, the start time of the third timer is determined based on a time when a second reference timer expires, and a start time of the second reference timer is determined based on a time when the second trigger signal is received or the time when the third signal is transmitted. For example, the start time of the third timer is a time when a second reference timer expires, and a start time of the second reference timer is a time when the second trigger signal is received or the time when the third signal is transmitted

In some implementations, the third timer is configured by a system broadcast message or by the first signal or by the second trigger signal.

In some implementations, the third trigger signal is transmitted after the third signal is received by the network device; or the third trigger signal is transmitted after a final back scattering occasion in a period is determined.

Herein, manners through which the network device transmits the third trigger signal may include the following options.

Option 1): upon receiving the third signal, the network device transmits the third trigger signal either immediately or after a delay (a short period of time).

Option 2): upon receiving the third signal, the network device transmits the third trigger signal after a final back scattering occasion in a period.

In some implementations, the third trigger signal carries one terminal identifier; or the third trigger signal carries multiple terminal identifiers.

Herein, the third trigger signal may be terminal-specific. In this case, the third trigger signal carries one terminal identifier. Alternatively, the third trigger signal may be terminal-common. In this case, the third trigger signal carries one or more terminal identifiers.

It should be noted that, the listening timer corresponding to the third trigger signal may be the same as or different from the listening timer corresponding to the second trigger signal.

For any one of the above mentioned schemes 1, 2, or 3, when the terminal transmits the back scattered signal, it is necessary to determine a resource to transmit the back scattered signal. In view of this, technical solutions in the embodiments of the disclosure introduce the concept of back scattering occasion, which is the resource for transmitting the back scattered signal. The terminal transmits the back scattered signal on the back scattering occasion. The back scattered signal herein may be the second signal, the third signal, the signal carrying the uplink data in the above schemes, and the like. Hereinafter, a scheme related to the back scattering occasion will be described.

**Back scattering occasion**

In an embodiment of the disclosure, the network device transmits first configuration information, and the terminal acquires the first configuration information. The first configuration information is for configuring a back scattering occasion, and the back scattering occasion is for transmission of the back scattered signal.

In some implementations, the first configuration information is carried in a system broadcast message or in the first signal.

It should be noted that, the first configuration information is for configuring back scattering occasion(s) within one period. The following information in the first configuration information indicates the relevant characteristics of the back scattering occasion(s) within one period.

In some implementations, the first configuration information includes at least one of: first information, second information, third information, fourth information or fifth information.

The first information is configured to indicate frequency domain information of the back scattering occasion.

The second information is configured to indicate time domain information of the back scattering occasion.

The third information is configured to indicate a total number of the back scattering occasions.

The fourth information is configured to indicate a number of the back scattering occasions in a time domain dimension.

The fifth information is configured to indicate a number of the back scattering occasions in a frequency domain dimension.

In some embodiments, the first information includes at least one parameter of a first parameter or a second parameter.

The first parameter is configured to indicate at least one frequency for the back scattering occasion.

The second parameter is configured to indicate a reference frequency and at least one frequency offset. The at least one frequency offset and the reference frequency are for determining the at least one frequency for the back scattering occasion.

Herein, the reference frequency may be a lowest frequency of frequencies where the back scattering occasion(s) is/are located, or may be a frequency corresponding to the trigger signal which corresponds to the back scattered signal.

In some implementations, the second information includes at least one of a third parameter or a fourth parameter.

The third parameter is configured to indicate a time interval between the back scattering occasions.

The fourth parameter is configured to indicate a starting time of the back scattering occasion or a time offset of the starting time of the back scattering occasion relative to a reference time.

Herein, the reference time may be a time corresponding to the trigger signal which corresponds to the back scattered signal.

In some implementations, the back scattering occasions are numbered within a period in order of frequency domain followed by time domain; or the back scattering occasions are numbered within a period in order of time domain followed by frequency domain.

The above scheme enables the configuration of the multiple back scattering occasions, that is, the first configuration information is for determining the multiple back scattering occasions. When the terminal transmits the back scattered signal, the terminal needs to select a back scattering occasion from the multiple back scattering occasions and transmits the back scattered signal through the back scattering occasion. In some implementations, manners through which the terminal selects the back scattering occasion may include the following options.

Option 1): the terminal selects a back scattering occasion randomly from multiple back scattering occasions, as the back scattering occasion for transmitting the back scattered signal.

Option 2): the terminal selects, based on the first terminal identifier, a back scattering occasion from the multiple back scattering occasions, as the back scattering occasion for transmitting the back scattered signal.

For example, N back scattering occasions are numbered from 0, and the number of a back scattering occasion selected by the terminal is:

$$Index = ID \bmod N$$

where ID is the identifier of the terminal (i.e., the first terminal identifier), and N is the number of the multiple back scattering occasions.

For any one of the above mentioned schemes 2 or 3, when the terminal transmits the first sequence, the terminal needs to determine which sequence to transmit. Hereinafter, a scheme related to the sequence will be described.

**Sequence**

In an embodiment of the disclosure, the network device transmits second configuration information, and the terminal acquires the second configuration information. The second configuration information is for configuring a root sequence or a sequence list, and the root sequence is for generating the sequence list.

Herein, the term "root sequence" may also be replaced with the "sequence generation auxiliary parameter", which is for generating a sequence list that includes one or more sequences.

In some implementations, the second configuration information is carried in a system broadcast message or in the first signal.

In some implementations, the root sequence or the sequence list is configured at a cell level; or the root sequence or the sequence list is configured at a period level.

The configuration of the sequence list may be implemented by the above scheme. When the terminal transmits the second signal, the terminal needs to select a sequence and carry the sequence in the second signal for transmission. In some implementations, manners through which the terminal selects the sequence may include the following options.

Option 1): the terminal selects a sequence randomly from the sequence list, as the first sequence.

Option 2): the terminal selects, based on the first terminal identifier, a sequence from the sequence list, as the first sequence.

For example, the sequences are numbered from 0, and the number of the sequence selected by the terminal is:

ID mod M

where ID is the identifier of the terminal (i.e., the first terminal identifier), and M is the number of the sequences included in the sequence list.

In the above scheme, the root sequence is also called the parent sequence, and is for generating the sequence list. The network device may configure the root sequence or the sequence list by a system broadcast message or a periodic signal (i.e. the first signal). The root sequence or the sequence list used in each period may be different or the same. If the root sequence or the sequence list used in each period is the same, the configuration information of the root sequence and/or the sequence list may be transmitted in the system broadcast message or in the periodic signal. If the root sequence or the sequence list used in each period is different, the root sequence and/or the sequence list may be transmitted in the periodic signal. Herein, if the root sequence is configured by the network device, the terminal may generate the sequence list based on the root sequence according to a generation manner agreed in a protocol, or generate the sequence list based on the root sequence according to a generation manner indicated by the network device.

The technical solutions in embodiments of the disclosure are exemplified in combination with specific application examples below. The following application examples are described by taking a tag as the terminal and taking a tag ID as the terminal identifier.

**Application example 1**

This application example is a random access procedure based on a tag ID. As illustrated in FIG. 11, the flow of the random access procedure based on the tag ID is as follows.

In operation 1101, the network device transmits a signal that is periodical (referred to as a periodic signal for short), to trigger a random access procedure.

In operation 1102, a tag performs back scattering communication based on the periodic signal and carries a tag ID in a back scattered signal.

In operation 1103, the network device transmits a trigger signal carrying the tag ID, and the random access procedure is completed.

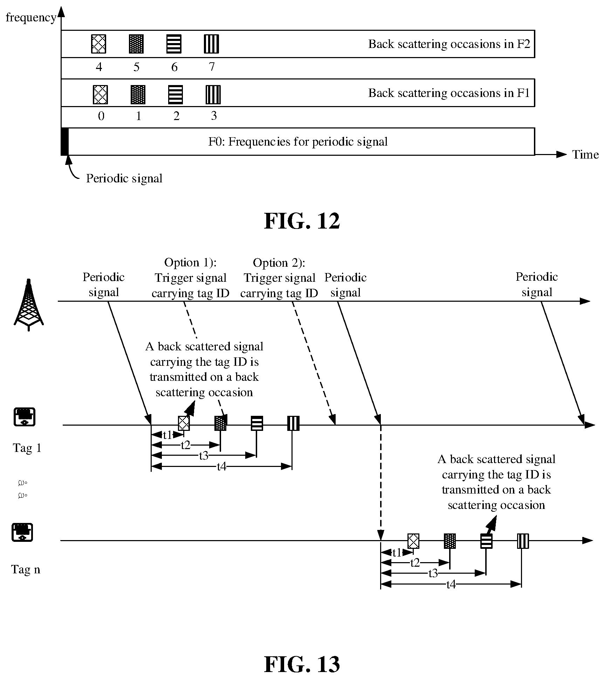

In the above operation 1102, a resource for transmitting the back scattered signal is referred to as a back scattering occasion. The network device may configure the back scattering occasion by a system broadcast message or the periodic signal. For the specific configuration information of the back scattering occasion, reference can be made to the description of the aforementioned related schemes. As an example, the back scattering occasions configured in a period are illustrated in FIG. 12, and the frequencies for the back scattering occasions include frequencies F1 and frequencies F2. There are 4 back scattering occasions in the frequencies F1 and 4 back scattering occasions in the frequencies F2, that is, there are 8 back scattering occasions in total. The 8 back scattering occasions are numbered within a period in order of frequency domain followed by time domain or in order of time domain followed by frequency domain. The 8 back scattering occasions may be numbered from 0 or 1. FIG. 12 illustrates that the 8 back scattering occasions are numbered in order of frequency domain followed by time domain, and numbered from 0. The tag may select a back scattering occasion from the 8 back scattering occasions randomly, or select a back scattering occasion from the 8 back scattering occasions based on the tag ID, and transmit a back scattered signal on the selected back scattering occasion.

FIG. 13 illustrates a specific interaction example of the random access procedure. As illustrated in FIG. 13, there may be one or more tags interacting with the network device. In FIG. 13, taking n tags as an example, the interaction between each tag and the network device are similar. Taking tag 1 as an example, the interaction process between the tag 1 and the network device is as follows.

Operation 1): when tag 1 is to actively initiate communication, that is, the tag 1 is to transmit uplink data to the network device, the tag 1 receives a periodic signal from the network device. In addition, the tag 1 also obtains configuration information of the back scattering occasions through a system broadcast message or the periodic signal.

Operation 2): the tag 1 may randomly select a back scattering occasion from the configured back scattering occasions, or select a back scattering occasion based on its own tag ID, and transmit a back scattered signal carrying its own tag ID on the selected back scattering occasion. The back scattered signal is generated by back scattering the periodic signal. In FIG. 13, the time corresponding to the back scattering occasion selected by the tag 1 is t1. And t2, t3 and t4 correspond to the time of other back scattering occasions, respectively. In an embodiment, after transmitting the back scattered signal, the tag 1 may start a timer (referred to as a timer T1). During operation of the timer T1, the tag 1 listens to the trigger signal from the network device (i.e. a response message from the network device in response to the back scattered signal). If the tag 1 receives the trigger signal from the network device before the timer T1 expires and the trigger signal carries the tag ID of the tag 1, the random access procedure is successful. Furthermore, the tag 1 performs back scattering communication based on the trigger message carrying the tag ID, and carries uplink data in the back scattered signal. If the tag 1 does not receive the trigger signal from network device or does not receive the trigger signal carrying the tag ID of the tag 1 from the network device before the timer T1 expires, it is determined that the random access procedure fails. Furthermore, the tag 1 may try reinitiating the random access procedure, that is, perform the above procedure again in a next period. In the above process, in order to ensure that the tag 1 may receive the response message, the network device may transmit the response message several times.

For the network device, after receiving the back scattered signal from the tag 1 in the operation 2), the network device may transmit the response message (i.e. a trigger signal carrying a tag ID) within a short period of time, as the option 1 illustrated in FIG. 13. Alternatively, the network device may transmit the response message (i.e. a trigger signal carrying a tag ID) after all the back scattering occasions within one period, as the option 2 illustrated in FIG. 13. In view of this, a timer T0 may be configured through the periodic signal or the system broadcast message. After the tag 1 transmits the back scattered signal in the operation 2) or receives the periodic signal, the timer T0 is started. When the timer T0 expires, the timer T1 is started.

**Application example 2**

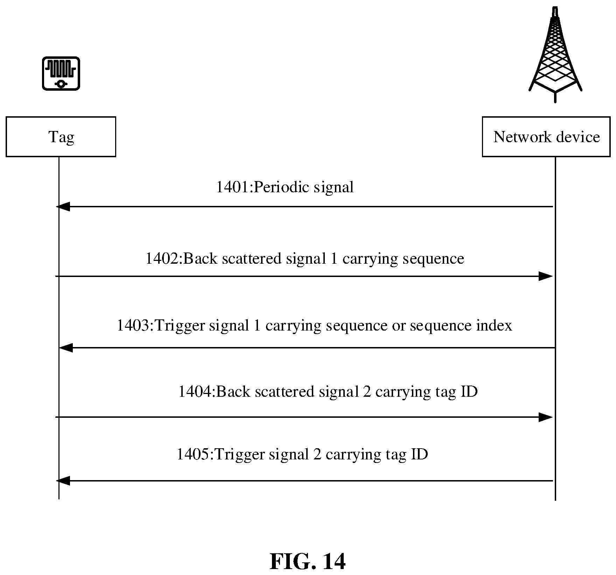

This application example is a random access procedure based on a sequence. As illustrated in FIG. 14, the flow of the random access procedure based on the sequence is as follows.

In operation 1401, the network device transmits a signal that is periodical (referred to as a periodic signal for short), to trigger a random access procedure.

In operation 1402, a tag performs back scattering communication based on the periodic signal, and carries a sequence in a back scattered signal 1.

Herein, the back scattered signal 1 may carry a sequence or carry a sequence index.

In operation 1403, the network device transmits a trigger signal 1 carrying the sequence or a sequence index.

In operation 1404, the tag performs back scattering communication based on the trigger signal 1, and carries a tag ID in a back scattered signal 2.

In operation 1405, the network device transmits a trigger signal 2 carrying the tag ID, and the random access procedure is completed.

In the above operations 1402 and 1404, a resource for transmitting the back scattered signal is referred to as a back scattering occasion. The network device may configure the back scattering occasion by a system broadcast message or the periodic signal. For the specific configuration information of the back scattering occasion, reference can be made to the description of the aforementioned related schemes. As an example, the back scattering occasions configured in a period are illustrated in FIG. 12, and the frequencies for the back scattering occasion include frequencies F1 and frequencies F2. There are 4 back scattering occasions in the frequencies F1 and 4 back scattering occasions in the frequencies F2, that is, there are 8 back scattering occasions in total. The 8 back scattering occasions are numbered within a period in order of frequency domain followed by time domain or in order of time domain followed by frequency domain. The 8 back scattering occasions may be numbered from 0 or 1. FIG. 12 illustrates that the 8 back scattering occasions are numbered in order of frequency domain followed by time domain, and numbered from 0. The tag may, from the 8 back scattering occasions, select a back scattering occasion randomly, or select a back scattering occasion based on the tag ID, and transmit a back scattered signal on the selected back scattering occasion.

In the above operation 1402, the terminal selects a sequence from the sequence list randomly, or selects a sequence from the sequence list based on the tag ID, and carries the selected sequence in the back scattered signal 1. The network device may configure the root sequence or the sequence list by a system broadcast message or a periodic signal. For the specific configuration information of the root sequence or the sequence list, reference can be made to the description of the aforementioned related schemes.

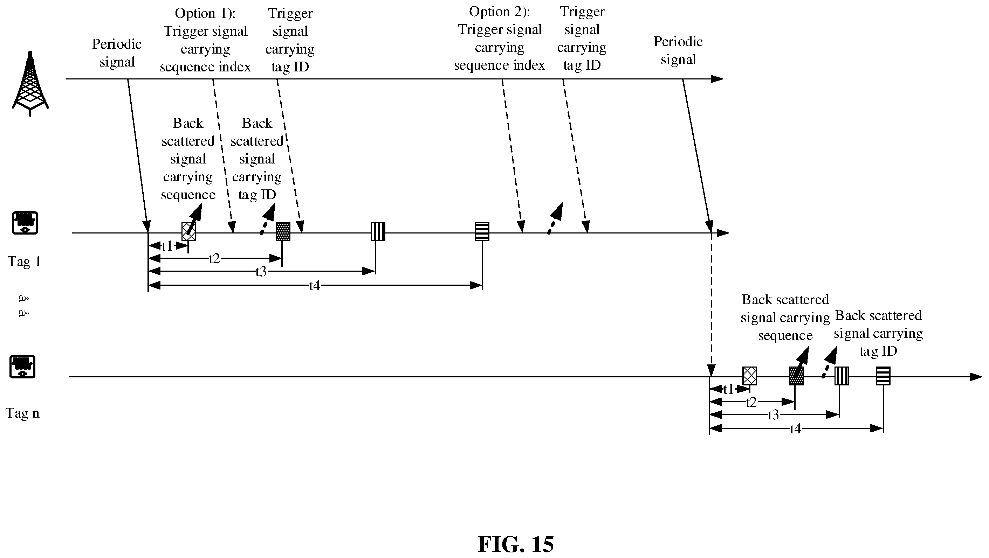

FIG. 15 illustrates a specific interaction example of the random access procedure. As illustrated in FIG. 15, there may be one or more tags interacting with the network device. In FIG. 15, taking n tags as an example, the interaction between each tag and the network device are similar. Taking tag 1 as an example, the interaction process between the tag 1 and the network device is as follows.

Operation 1): when tag 1 is to actively initiate communication, that is, the tag 1 is to transmit uplink data to the network device, the tag 1 receives a periodic signal from the network device. In addition, the tag 1 also obtains configuration information of the sequence list and configuration information of the back scattering occasions through a system broadcast message or the periodic signal.

Operation 2): the tag 1 may, from the configured sequence list, select a sequence randomly or select a sequence based on its own tag ID. The tag 1 may, from the configured back scattering occasions, select a back scattering occasion randomly, or select a back scattering occasion based on its own tag ID. The tag 1 transmits a back scattered signal carrying the selected sequence on the selected back scattering occasion. The back scattered signal is generated by back scattering the periodic signal. In FIG. 15, the time corresponding to the back scattering occasion selected by the tag 1 is t1. And t2, t3 and t4 correspond to the time of other back scattering occasions, respectively. In an embodiment, after transmitting the back scattered signal, the tag 1 may start a timer (referred to as a timer T2). During operation of the timer T2, the tag 1 listens to the trigger signal from the network device (i.e. a response message from the network device in response to the back scattered signal). When the tag 1 receives a trigger signal from the network device before the timer T2 expires and the trigger signal carries the sequence index or the sequence of the tag 1, the tag 1 initiates a new back scattering based on the trigger signal. If the tag 1 does not receive the trigger signal from network device or does not receive the trigger signal carrying the sequence index or the sequence of the tag 1 from the network device before the timer T2 expires, it is determined that the random access procedure fails. Furthermore, the tag 1 may try reinitiating the random access procedure, that is, perform the above procedure again in a next period. In order to ensure that the tag 1 may receive the response message, the network device may transmit the response message several times.

Operation 3): when the tag 1 initiates the new back scattering based on the trigger signal from the network device in the operation 2), the tag ID of the tag 1 is carried in the back scattered signal. In an embodiment, after transmitting the back scattered signal, the tag 1 may start a timer (referred to as a timer T1). During operation of the timer T1, the tag 1 listens to the trigger signal from the network device (i.e. a response message from the network device in response to the back scattered signal). If the tag 1 receives the trigger signal from the network device before the timer T1 expires and the trigger signal carries the tag ID of the tag 1, the random access procedure is successful. Furthermore, the tag 1 performs back scattering communication based on the trigger message carrying the tag ID, and carries uplink data in the back scattered signal. If the tag 1 does not receive the trigger signal from the network device or does not receive the trigger signal carrying the tag ID of the tag 1 from the network device before the timer T1 expires, it is determined that the random access procedure fails. Furthermore, the tag 1 may try reinitiating the random access procedure, that is, perform the above procedure again in a next period. In the above process, in order to ensure that the tag 1 may receive the response message, the network device may transmit the response message several times.

For the network device, after receiving the back scattered signal from the tag 1 in the operation 2), the network device may transmit the response message (i.e. a trigger signal carrying a sequence index or a sequence) within a short period of time, as the option 1 illustrated in FIG. 15. Alternatively, the network device may transmit the response message (i.e. a trigger signal carrying a sequence index or a sequence) after all the back scattering occasions within one period, as the option 2 illustrated in FIG. 15. In view of this, a timer T0 may be configured through the periodic signal or the system broadcast message. After the tag 1 transmits the back scattered signal in the operation 2) or receives the periodic signal, the timer T0 is started. When the timer T0 expires, the timer T2 is started.

**Application example 3**

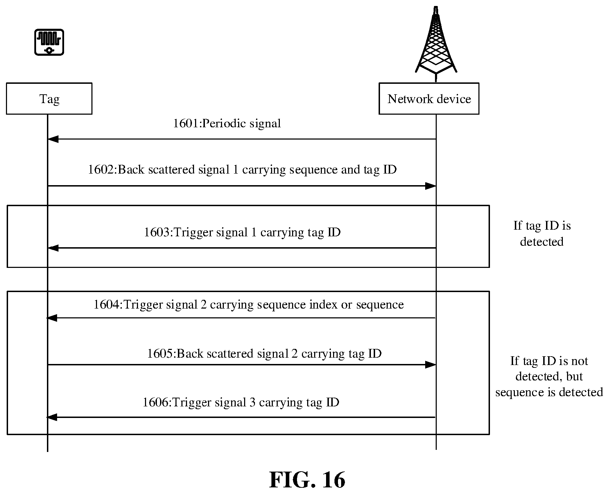

This application example is a random access procedure based on a sequence and a tag ID. As illustrated in FIG. 16, the flow of the random access procedure based on the sequence is as follows.

In operation 1601, the network device transmits a signal that is periodical (referred to as a periodic signal for short), to trigger a random access procedure.

In operation 1602, a tag performs back scattering communication based on the periodic signal, and carries a sequence and a tag ID in a back scattered signal 1.

In operation 1603, if the tag ID is detected (or successfully decoded) by the network device, the network device transmits a trigger signal 1 carrying the tag ID, and the random access procedure is completed.

In operation 1604, if the tag ID is not detected (or not successfully decoded) by the network device but the sequence is detected (or successfully decoded) by the network device, the network device transmits a trigger signal 2 carrying the sequence or a sequence index.

In operation 1605, the tag performs back scattering communication based on the trigger signal 2, and carries the tag ID in a back scattered signal 2.

In operation 1606, the network device transmits a trigger signal 3 carrying the tag ID, and the random access procedure is completed.

In the above operations 1602 and 1405, a resource for transmitting the back scattered signal is referred to as a back scattering occasion. The network device may configure the back scattering occasion by a system broadcast message or the periodic signal. For the specific configuration information of the back scattering occasion, reference can be made to the description of the aforementioned related schemes. As an example, the back scattering occasion configured in a period is illustrated in FIG. 12, and the frequencies for the back scattering occasions include frequencies F1 and frequencies F2. There are 4 back scattering occasions in the frequencies F1 and 4 back scattering occasions in the frequencies F2, that is, there are 8 back scattering occasions in total. The 8 back scattering occasions are numbered within a period in order of frequency domain followed by time domain or in order of time domain followed by frequency domain. The 8 back scattering occasions may be numbered from 0 or 1. FIG. 12 illustrates that the 8 back scattering occasions are numbered in order of frequency domain followed by time domain, and numbered from 0. The tag may, from the 8 back scattering occasions, select a back scattering occasion randomly, or select a back scattering occasion based on the tag ID, and transmit a back scattered signal on the selected back scattering occasion.

In the above operation 1602, the terminal selects a sequence from the sequence list randomly, or selects a sequence from the sequence list based on the tag ID, and carries the selected sequence in the back scattered signal 1. The network device may configure the root sequence or the sequence list by a system broadcast message or a periodic signal. For the specific configuration information of the root sequence or the sequence list, reference can be made to the description of the aforementioned related schemes.

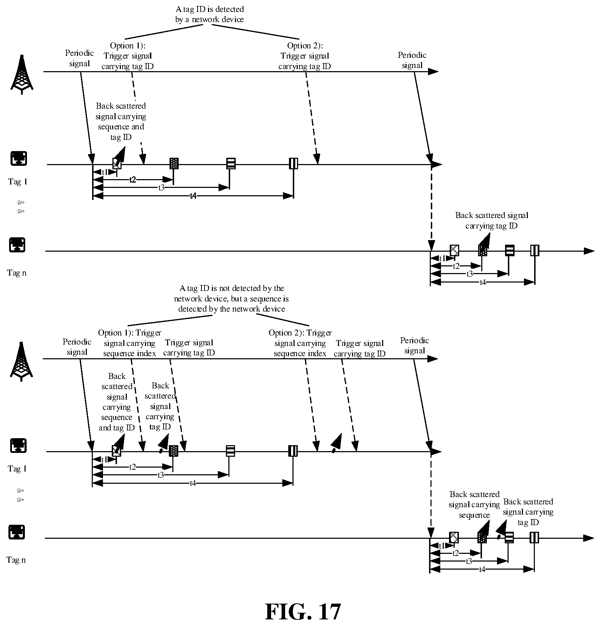

FIG. 17 illustrates a specific interaction example of the random access procedure. As illustrated in FIG. 17, there may be one or more tags interacting with the network device. In FIG. 17, taking n tags as an example, the interaction between each tag and the network device are similar. Taking tag 1 as an example, the interaction process between the tag 1 and the network device is as follows.

Operation 1): when tag 1 is to actively initiate communication, that is, the tag 1 is to transmit uplink data to the network device, the tag 1 receives a periodic signal from the network device. In addition, the tag 1 also obtains configuration information of the sequence list and configuration information of the back scattering occasions through a system broadcast message or the periodic signal.

Operation 2): the tag 1 may, from the configured sequence list, select a sequence randomly or select a sequence based on its own tag ID. The tag 1 may, from the configured back scattering occasions, select a back scattering occasion randomly, or select a back scattering occasion based on its own tag ID. The tag 1 transmits a back scattered signal carrying the selected sequence and its own tag ID on the selected back scattering occasion. The back scattered signal is generated by back scattering the periodic signal. In FIG. 17, the time corresponding to the back scattering occasion selected by the tag 1 is t1. And t2, t3 and t4 correspond to the time of other back scattering occasions, respectively. In an embodiment, after transmitting the back scattered signal, the tag 1 may start a timer (referred to as a timer T3). During operation of the timer T3, the tag 1 listens to the trigger signal from the network device (i.e. a response message from the network device in response to the back scattered signal).

If the tag 1 receives the trigger signal from the network device before the timer T3 expires and the trigger signal carries the tag ID of the tag 1, the random access procedure is successful. Furthermore, the tag 1 performs back scattering communication based on the trigger message carrying the tag ID, and carries uplink data in the back scattered signal.

If the tag 1 receives a trigger signal from the network device before the timer T3 expires and the trigger signal carries the sequence index or the sequence of the tag 1, the tag 1 initiates a new back scattering based on the trigger signal.

If the tag 1 does not receive the trigger signal from the network device before the timer T3 expires, it is determined that the random access procedure fails. Furthermore, the tag 1 may try reinitiating the random access procedure, that is, perform the above procedure again in a next period. In order to ensure that the tag 1 may receive the response message, the network device may transmit the response message several times.

Operation 3): when the tag 1 initiates the new back scattering based on the trigger signal from the network device in the operation 2), the tag ID of the tag 1 is carried in the back scattered signal. In an embodiment, after transmitting the back scattered signal, the tag 1 may start a timer (referred to as a timer T1). During operation of the timer T1, the tag 1 listens to the trigger signal from the network device (i.e. a response message from the network device in response to the back scattered signal). If the tag 1 receives the trigger signal from the network device before the timer T1 expires and the trigger signal carries the tag ID of the tag 1, the random access procedure is successful. Furthermore, the tag 1 performs back scattering communication based on the trigger message carrying the tag ID, and carries uplink data in the back scattered signal. If the tag 1 does not receive the trigger signal from the network device or does not receive the trigger signal carrying the tag ID of the tag 1 from the network device before the timer T1 expires, it is determined that the random access procedure fails. Furthermore, the tag 1 may try reinitiating the random access procedure, that is, perform the above procedure again in a next period. In the above process, in order to ensure that the tag 1 may receive the response message, the network device may transmit the response message several times.

For the network device, after receiving the back scattered signal from the tag 1 in the operation 2), the network device may transmit the response message (i.e. a trigger signal carrying a sequence index or a sequence) within a short period of time, as the option 1 illustrated in FIG. 17. Alternatively, the network device may transmit the response message (i.e. a trigger signal carrying a sequence index or a sequence) after all the back scattering occasions within one period, as the option 2 illustrated in FIG. 17. In view of this, a timer T0 may be configured through the periodic signal or the system broadcast message. After the tag 1 transmits the back scattered signal in the operation 2) or receives the periodic signal, the timer T0 is started. When the timer T0 expires, the timer T3 is started.

The preferred implementations of the disclosure have been described in detail as above with reference to the accompanying drawings. However, the disclosure is not limited to the specific details in the above implementations. Within the scope of the technical concept of the disclosure, various simple modifications may be made to the technical solutions of the disclosure, and all these simple modifications belong to the scope of protection of the disclosure. For example, various specific technical features described in the above specific implementations may be combined in any suitable manner without contradiction. In order to avoid unnecessary repetition, various possible combination manners will not be described any more in the disclosure. For another example, various different implementations of the disclosure may also be combined arbitrarily, as long as they do not depart from the idea of the disclosure, which should also be considered as the contents disclosed in the disclosure. For another example, provided that there is no conflict, the embodiments and/or technical features within the embodiments described in the disclosure may be arbitrarily combined with related art. The technical solutions obtained after the combination should also fall within the scope of protection of the disclosure.

It should further be understood that, in various method embodiments of the disclosure, the values of the sequence numbers of the aforementioned processes do not imply the sequence of execution. The sequence of execution of the processes should be determined based on functions thereof and inherent logics, and the values of the sequence numbers should not constitute any limitation on the implementation processes of the embodiments of the disclosure. Furthermore, in the embodiments of the disclosure, the terms "downlink", "uplink" and "sidelink" are used to represent a transmission direction of a signal or data. Herein, the "downlink" is used to represent that the transmission direction of the signal or data is a first direction transmitted from a station to a user equipment of a cell; the "uplink" is used to represent that the transmission direction of the signal or data is a second direction transmitted from the user equipment of the cell to the station; and the "sidelink" is used to represent that the transmission direction of the signal or data is a third direction transmitted from a user equipment 1 to a user equipment 2. For example, a "downlink signal" represents that the signal is transmitted in the first direction. In addition, in the embodiments of the disclosure, the term "and/or" merely indicates an association relationship for describing associated objects, and represents that there are three kinds of relationships. Specifically, "A and/or B" may represent three situations, i.e., independent existence of A, existence of both A and B, and independent existence of B. Additionally, the character "/" herein generally represents that the previous and next objects form a kind of "or" relationship.

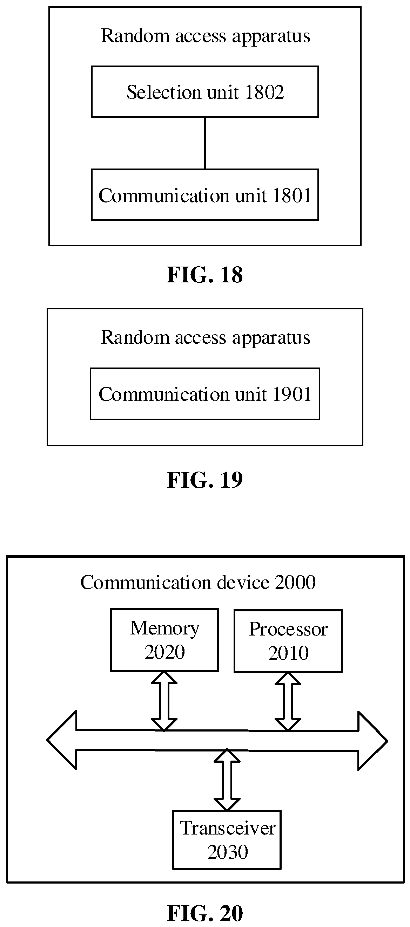

FIG. 18 is a first schematic diagram of the compositional structure of the random access apparatus provided in an embodiment of the disclosure, and the apparatus is applied to a terminal. As illustrated in FIG. 18, the random access apparatus includes a communication unit 1801.

The communication unit 1801 is configured to receive a first signal from a network device, and transmit, based on the first signal, a second signal which is a back scattered signal of the first signal. The second signal carries a first sequence and/or a first terminal identifier, the first terminal identifier is an identifier of the terminal, and the first sequence and/or the first terminal identifier is used for random access procedure of the terminal.

In some implementations, the first signal is a periodic signal.

In some implementations, for the case where the second signal carries the first terminal identifier, the communication unit 1801 is configured to, when a first trigger signal carrying the first terminal identifier is received from the network device, determine that the random access procedure is successful, and/or transmit uplink data based on the first trigger signal, where a signal carrying the uplink data is a back scattered signal of the first trigger signal. The communication unit 1801 is further configured to, when the first trigger signal carrying the first terminal identifier is not received from the network device, determine that the random access procedure fails, and/or perform the random access procedure again.

In some implementations, for the case where the second signal carries the first sequence, the communication unit 1801 is configured to, when a second trigger signal carrying the first sequence or a first sequence index is received from the network device, transmit a third signal based on the second trigger signal, where the third signal is a back scattered signal of the second trigger signal, the third signal carries the first terminal identifier, and the first sequence index is an index of the first sequence. The communication unit 1801 is further configured to, when a third trigger signal carrying the first terminal identifier is received from the network device, determine that the random access procedure is successful, and/or transmit uplink data based on the third trigger signal, where a signal carrying the uplink data is a back scattered signal of the third trigger signal.

In some implementations, the communication unit 1801 is configured to, when the third trigger signal carrying the first terminal identifier is not received from the network device, determine that the random access procedure fails, and/or perform the random access procedure again.

In some implementations, the communication unit 1801 is configured to, when the second trigger signal carrying the first sequence or the first sequence index is not received from the network device, determine that the random access procedure fails, and/or perform the random access procedure again.

In some implementations, for the case where the second signal carries the first sequence and the first terminal identifier, the communication unit 1801 is configured to:

when a first trigger signal carrying the first terminal identifier is received from the network device, determine that the random access procedure is successful, and/or transmit uplink data based on the first trigger signal, where a signal carrying the uplink data is a back scattered signal of the first trigger signal; when a second trigger signal carrying the first sequence or a first sequence index is received from the network device, transmit a third signal based on the second trigger signal, where the third signal is a back scattered signal of the second trigger signal, the third signal carries the first terminal identifier, and the first sequence index is an index of the first sequence; when a third trigger signal carrying the first terminal identifier is received from the network device, determine that the random access procedure is successful, and/or transmit uplink data based on the third trigger signal, where a signal carrying the uplink data is a back scattered signal of the third trigger signal.

In some implementations, the communication unit 1801 is configured to, when the third trigger signal carrying the first terminal identifier is not received from the network device, determine that the random access procedure fails, and/or perform the random access procedure again.

In some implementations, the communication unit 1801 is configured to, when the first trigger signal carrying the first terminal identifier is not received from the network device and the second trigger signal carrying the first sequence or the first sequence index is not received from the network device, determine that the random access procedure fails, and/or perform the random access procedure again.

In some implementations, the operation that the random access procedure is performed again includes that: the second signal is retransmitted based on the first signal; or the second signal is transmitted based on the first signal of a next period.

In some implementations, random access resources used for performing again the random access procedure are reselected.

In some implementations, a timer corresponding to the first trigger signal is a first timer, and during operation of the first timer, the terminal listens to the first trigger signal and/or determines whether the first trigger signal is received.

In some implementations, a start time of the first timer is determined based on a time when the second signal is transmitted, or the start time of the first timer is determined based on a time when a first reference timer expires, where a start time of the first reference timer is determined based on a time when the first signal is received or the time when the second signal is transmitted.

In some implementations, the first timer is configured by a system broadcast message or by the first signal.

In some implementations, the first trigger signal is transmitted after the second signal is received by the network device; or the first trigger signal is transmitted after a final back scattering occasion in a period.

In some implementations, the first trigger signal carries one terminal identifier; or the first trigger signal carries multiple terminal identifiers.

In some implementations, a timer corresponding to the second trigger signal is a second timer, and during operation of the second timer, the terminal listens to the second trigger signal and/or determines whether the second trigger signal is received.

In some implementations, a start time of the second timer is determined based on a time when the second signal is transmitted, or the start time of the second timer is determined based on a time when a first reference timer expires, where a start time of the first reference timer is determined based on a time when the first signal is received or the time when the second signal is transmitted.

In some implementations, the second timer is configured by a system broadcast message or by the first signal.

In some implementations, the second trigger signal is transmitted after the second signal is received by the network device; or the second trigger signal is transmitted after a final back scattering occasion in a period.

In some implementations, the second trigger signal carries one sequence or one sequence index; or the second trigger signal carries multiple sequences or multiple sequence indexes.

In some implementations, a timer corresponding to the third trigger signal is a third timer, and during operation of the third timer, the terminal listens to the third trigger signal and/or determines whether the third trigger signal is received.

In some implementations, a start time of the third timer is determined based on a time when the third signal is transmitted, or the start time of the third timer is determined based on a time when a second reference timer expires, where a start time of the second reference timer is determined based on a time when the second signal is received or the time when the third signal is transmitted.

In some implementations, the third timer is configured by a system broadcast message or by the first signal or by the second trigger signal.

In some implementations, the third trigger signal is transmitted after the third signal is received by the network device; or the third trigger signal is transmitted after a final back scattering occasion in a period is determined.

In some implementations, the third trigger signal carries one terminal identifier; or the third trigger signal carries multiple terminal identifiers.

In some implementations, the communication unit 1801 is configured to acquire first configuration information, the first configuration information is for configuring a back scattering occasion, and the back scattering occasion is for transmission of the back scattered signal.

In some implementations, the first configuration information includes at least one of: first information, second information, third information, fourth information or fifth information.

The first information is configured to indicate frequency domain information of the back scattering occasion.

The second information is configured to indicate time domain information of the back scattering occasion.

The third information is configured to indicate a total number of the back scattering occasions.

The fourth information is configured to indicate a number of the back scattering occasions in a time domain dimension.

The fifth information is configured to indicate a number of the back scattering occasions in a frequency domain dimension.

In some implementations, the first information includes at least one parameter of a first parameter or a second parameter.

The first parameter is configured to indicate at least one frequency for the back scattering occasion.

The second parameter is configured to indicate a reference frequency and at least one frequency offset, wherein the at least one frequency offset and the reference frequency are for determining the at least one frequency for the back scattering occasion.

In some implementations, the second information includes at least one of a third parameter or a fourth parameter.

The third parameter is configured to indicate a time interval between the back scattering occasions.

The fourth parameter is configured to indicate a starting time of the back scattering occasion or a time offset of the starting time of the back scattering occasion relative to a reference time.

In some implementations, the back scattering occasions are numbered within a period in order of frequency domain followed by time domain; or the back scattering occasions are numbered within a period in order of time domain followed by frequency domain.

In some implementations, the first configuration information is carried in a system broadcast message or in the first signal.

In some implementations, the first configuration information is for determining multiple back scattering occasions.

The apparatus further includes a selection unit 1802. The selection unit 1802 is configured to randomly select a back scattering occasion from the multiple back scattering occasions, as the back scattering occasion for transmitting the back scattered signal. Alternatively, the selection unit 1802 is configured to select, based on the first terminal identifier, a back scattering occasion from the multiple back scattering occasions, as the back scattering occasion for transmitting the back scattered signal.

In some implementations, the communication unit 1801 is configured to acquire second configuration information, where the second configuration information is for configuring a root sequence or a sequence list, and the root sequence is for generating the sequence list.

In some implementations, the root sequence or the sequence list is configured at a cell level; or the root sequence or the sequence list is configured at a period level.

In some implementations, the second configuration information is carried in a system broadcast message or in the first signal.

In some implementations, the selection unit 1802 is configured to randomly select a sequence from the sequence list as the first sequence. Alternatively, the selection unit 1802 is configured to select, based on the first terminal identifier, a sequence from the sequence list as the first sequence.

In some implementations, the period is a period of the first signal.

In some implementations, the terminal is a zero power terminal, or a passive IoT terminal, or an ambient powered IoT terminal.

It should be understood by those skilled in the art that the related description of the aforementioned random access apparatus in the embodiments of the disclosure may be understood with reference to the related description of the random access method in the embodiments of the disclosure.

FIG. 19 is a second schematic diagram of the compositional structure of the random access apparatus provided in an embodiment of the disclosure, and the apparatus is applied to a network device. As illustrated in FIG. 19, the random access apparatus includes a communication unit 1901.

The communication unit 1901 is configured to transmit a first signal, and receive, a second signal which is a back scattered signal of the first signal, from a terminal. The second signal carries a first sequence and/or a first terminal identifier, the first terminal identifier is an identifier of the terminal, and the first sequence and/or the first terminal identifier is used for random access procedure of the terminal.

In some implementations, the first signal is a periodic signal.

In some implementations, for the case where the second signal carries the first terminal identifier, the communication unit 1901 is configured to, when the first terminal identifier is detected, transmit a first trigger signal carrying the first terminal identifier.

In some implementations, the communication unit 1901 is configured to receive uplink data from the terminal, where a signal carrying the uplink data is a back scattered signal of the first trigger signal.

In some implementations, for the case where the second signal carries the first sequence, the communication unit 1901 is configured to, when the first sequence is detected, transmit a second trigger signal carrying the first sequence or a first sequence index, where the first sequence index is an index of the first sequence; receive a third signal which is a back scattered signal of the second trigger signal, from the terminal, where the third signal carries the first terminal identifier; and when the first terminal identifier is detected, transmit a third trigger signal carrying the first terminal identifier.

In some implementations, the communication unit 1901 is configured to receive uplink data from the terminal, where a signal carrying the uplink data is a back scattered signal of the third trigger signal.

In some implementations, for the case where the second signal carries the first sequence and the first terminal identifier, the communication unit 1901 is configured to:

when the first terminal identifier is detected, transmit a first trigger signal carrying the first terminal;
when the first terminal identifier is not detected but the first sequence is detected, transmit a second trigger signal carrying the first sequence or a first sequence index, where the first sequence index is an index of the first sequence; receive a third signal which is a back scattered signal of the second trigger signal, from the terminal, where the third signal carries the first terminal identifier; and when the first terminal identifier is detected, transmit a third trigger signal carrying the first terminal identifier.

In some implementations, the communication unit 1901 is configured to receive uplink data from the terminal, where a signal carrying the uplink data is a back scattered signal of the first trigger signal or a back scattered signal of the third trigger signal.

In some implementations, the first trigger signal is transmitted after the second signal is received by the network device; or the first trigger signal is transmitted after a final back scattering occasion in a period.

In some implementations, the first trigger signal carries one terminal identifier; or the first trigger signal carries multiple terminal identifiers.

In some implementations, the second trigger signal is transmitted after the second signal is received by the network device; or the second trigger signal is transmitted after a final back scattering occasion in a period.

In some implementations, the second trigger signal carries one sequence or one sequence index; or the second trigger signal carries multiple sequences or multiple sequence indexes.

In some implementations, the third trigger signal is transmitted after the third signal is received by the network device; or the third trigger signal is transmitted after a final back scattering occasion in a period is determined.

In some implementations, the third trigger signal carries one terminal identifier; or the third trigger signal carries multiple terminal identifiers.

In some implementations, the communication unit 1901 is configured to transmit first configuration information, where the first configuration information is for configuring a back scattering occasion, and the back scattering occasion is for transmission of the back scattered signal.

In some implementations, the first configuration information includes at least one of: first information, second information, third information, fourth information or fifth information.

The first information is configured to indicate frequency domain information of the back scattering occasion.

The second information is configured to indicate time domain information of the back scattering occasion.

The third information is configured to indicate a total number of the back scattering occasions.

The fourth information is configured to indicate a number of the back scattering occasions in a time domain dimension.

The fifth information is configured to indicate a number of the back scattering occasions in a frequency domain dimension.

In some embodiments, the first information includes at least one parameter of a first parameter or a second parameter.

The first parameter is configured to indicate at least one frequency for the back scattering occasion.

The second parameter is configured to indicate a reference frequency and at least one frequency offset, wherein the at least one frequency offset and the reference frequency are for determining the at least one frequency for the back scattering occasion.

In some implementations, the second information includes at least one of a third parameter or a fourth parameter.

The third parameter is configured to indicate a time interval between the back scattering occasions.

The fourth parameter is configured to indicate a starting time of the back scattering occasion or a time offset of the starting time of the back scattering occasion relative to a reference time.

In some implementations, the back scattering occasions are numbered within a period in order of frequency domain followed by time domain; or the back scattering occasions are numbered within a period in order of time domain followed by frequency domain.

In some implementations, the first configuration information is carried in a system broadcast message or in the first signal.

In some implementations, the communication unit 1901 is configured to transmit second configuration information, where the second configuration information is for configuring a root sequence or a sequence list, and the root sequence is for generating the sequence list.

In some implementations, the root sequence or the sequence list is configured at a cell level; or the root sequence or the sequence list is configured at a period level.

In some implementations, the second configuration information is carried in a system broadcast message or in the first signal.

In some implementations, the period is a period of the first signal.

In some implementations, the terminal is a zero power terminal, or a passive IoT terminal, or an ambient powered IoT terminal.

It should be understood by those skilled in the art that the related description of the aforementioned random access apparatus in the embodiments of the disclosure may be understood with reference to the related description of the random access method in the embodiments of the disclosure.

FIG. 20 is a schematic structural diagram of a communication device 2000 according to an embodiment of the disclosure. The communication device may be a terminal or a network device. The communication device 2000 illustrated in FIG. 12 includes a processor 2010 that may call and execute a computer program from a memory to implement each of the methods in the embodiments of the disclosure.

In an embodiment, as illustrated in FIG. 20, the communication device 2000 may further include a memory 2020. The processor 2010 may invoke and execute a computer program from the memory 2020 to implement each of the methods in the embodiments of the disclosure.

The memory 2020 may be a separate device independent of the processor 2010, or may be integrated in the processor 2010.

In an embodiment, as illustrated in FIG. 20, the communication device 2000 may further include a transceiver 2030, and the processor 2010 may control the transceiver 2030 to communicate with other devices. Specifically, the transceiver may transmit information or data to other devices, or receive information or data from other devices.

The transceiver 2030 may include a transmitter and a receiver. The transceiver 2030 may further include one or more antennas.

In an embodiment, the communication device 2000 may specifically be the network device in the embodiments of the disclosure, and the communication device 2000 may implement corresponding processes implemented by the network device in each of the methods in the embodiments of the disclosure. For brevity, details will not be repeated herein again.

In an embodiment, the communication device 2000 may specifically be the mobile terminal/the terminal in the embodiments of the disclosure, and the communication device 2000 may implement corresponding processes implemented by the mobile terminal/the terminal in each of the methods in the embodiments of the disclosure. For brevity, details will not be repeated herein again

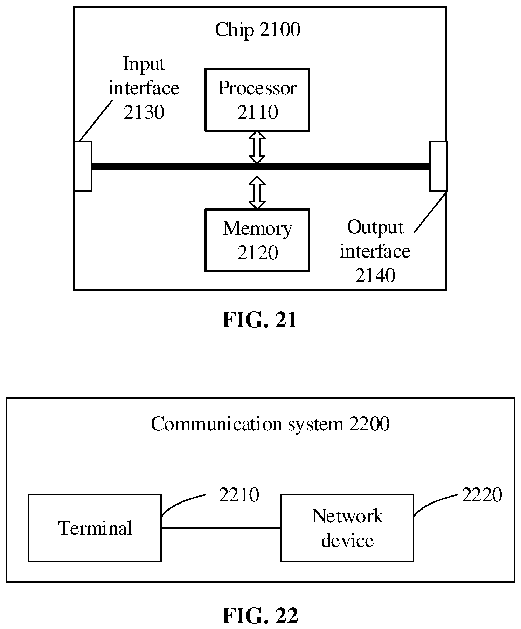

FIG. 21 is a schematic structural illustration of a chip according to an embodiment of the disclosure. The chip 2100 illustrated in FIG. 21 includes a processor 2110 that may call and execute a computer program from a memory to implement each of the methods in the embodiments of the disclosure.

In an embodiment, as illustrated in FIG. 21, the chip 2100 may further include a memory 2120. The processor 2110 may invoke and execute a computer program from the memory 2120 to implement each of the methods in the embodiments of the disclosure.

The memory 2120 may be a separate device independent of the processor 2110, or may be integrated in the processor 2110.

In an embodiment, the chip 2100 may further include an input interface 2130. The processor 2110 may control the input interface 2130 to communicate with other devices or chips. Specifically, the input interface 830 may acquire information or data from other devices or chips.

In an embodiment, the chip 2100 may further include an output interface 2140. The processor 2110 may control the output interface 2140 to communicate with other devices or chips. Specifically, the output interface 1540 may output information or data to other devices or chips.

In an embodiment, the chip may be applied to the network device in the embodiments of the disclosure, and the chip may implement corresponding processes implemented by the network device in each of the methods in the embodiments of the disclosure. For brevity, details will not be repeated herein again.

In an embodiment, the chip may be applied to the mobile terminal/the terminal in the embodiments of the disclosure, and the chip may implement corresponding processes implemented by the mobile terminal/the terminal in each of the methods in the embodiments of the disclosure. For brevity, details will not be repeated herein again.

It should be understood that the chip mentioned in the embodiments of the disclosure may also be referred to as a system-level chip, a system chip, a chip system, or a system-on-chip, etc.

FIG. 22 is a schematic block diagram of a communication system 2200 according to an embodiment of the disclosure. As illustrated in FIG. 22, the communication system 2200 includes a terminal 2210 and a network device 2220.

The terminal 2210 may be configured to implement the corresponding functions implemented by the terminal in the foregoing method, and the network device 2220 may be configured to implement the corresponding functions implemented by the network device in the foregoing method. For brevity, details will not be repeated herein again.

It is to be understood that the processor in the embodiment of the disclosure may be an integrated circuit chip with a signal processing capability. In an implementation process, various operations of the aforementioned method embodiments may be completed by an integrated logic circuit of hardware or the instructions in the form of software in the processor. The processor described above may be a general-purpose processor, a digital signal processor (DSP), an application specific integrated circuit (ASIC), a field programmable gate array (FPGA) or another programmable logic device, discrete gate or transistor logic device, or discrete hardware component. Various methods, operations and logic block diagrams disclosed in the embodiments of the disclosure may be implemented or performed. The general-purpose processor may be a microprocessor, or may be any conventional processor or the like. The operations of the methods disclosed in the embodiments of the disclosure may be directly embodied to be executed and completed by a hardware decoding processor, or by a combination of hardware and software modules in the decoding processor. The software module may be located in a mature storage medium in the field, such as a random access memory (RAM), a flash memory, a read-only memory (ROM), a programmable ROM (PROM), or an electrically erasable programmable memory, a register, etc. The storage medium is located in the memory, and the processor reads information in the memory and completes the operations of the foregoing method in combination with its hardware.

It is understood that, in the embodiment of the disclosure, the memory may be a volatile memory or a non-volatile memory, or may include both the volatile memory and the non-volatile memory. The non-volatile memory may be a ROM, a PROM, an Erasable PROM (EPROM), an Electrically EPROM (EEPROM), or a flash memory. The volatile memory may be a RAM, which serves as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM) and a Direct Rambus RAM (DR RAM). It is to be noted that the memory of the systems and methods described herein is intended to include, but not limited to, memories of these and any other suitable types.

It is to be understood that the aforementioned memory is described only exemplarily rather than limitedly. For example, the memory in the embodiments of the disclosure may further be an SRAM, a DRAM, an SDRAM, a DDR SDRAM, an ESDRAM, an SLDRAM and a DR RAM, etc. That is, the memory in the embodiments of the disclosure is intended to include, but not limited to, memories of these and any other suitable types.

In the embodiments of the disclosure, a computer-readable storage medium having stored thereon a computer program is further provided.

In an embodiment, the computer-readable storage medium may be applied to the network device in the embodiments of the disclosure, and the computer program is executed to enable a computer to execute corresponding processes implemented by the network device in each of the methods in the embodiments of the disclosure. For brevity, details will not be repeated herein again.

Optionally, the computer-readable storage medium may be applied to the mobile terminal/the terminal in the embodiments of the disclosure, and the computer program is executed to enable the computer to execute corresponding processes implemented by the mobile terminal/the terminal in each of the methods in the embodiments of the disclosure. For brevity, details will not be repeated herein again.

In the embodiment of the disclosure, a computer program product having stored therein computer program instructions is further provided.

In an embodiment, the computer program product may be applied to the network device in the embodiments of the disclosure, and the computer program instructions cause the computer to execute corresponding processes implemented by the network device in each of the methods in the embodiments of the disclosure. For brevity, details will not be repeated herein again.

Optionally, the computer program product may be applied to the mobile terminal/the terminal in the embodiments of the disclosure, and the computer program instructions cause the computer to execute corresponding processes implemented by the mobile terminal/the terminal in each of methods in the embodiments of the disclosure. For brevity, details will not be repeated herein again.

In the embodiment of the disclosure, a computer program is further provided.

In an embodiment, the computer program may be applied to the network device in the embodiments of the disclosure. The computer program, when executed by a computer, causes the computer to execute corresponding processes implemented by the network device in each of methods in the embodiments of the disclosure. For brevity, details will not be repeated herein again.

Optionally, the computer program may be applied to the mobile terminal/the terminal in the embodiments of the disclosure. The computer program, when executed by a computer, causes the computer to execute corresponding processes implemented by the mobile terminal/the terminal in each of methods in the embodiments of the disclosure. For brevity, details will not be repeated herein again.

Those of ordinary skilled in the art may appreciate that the units and algorithmic operations of each of the examples described in the embodiments disclosed herein may be implemented in electronic hardware, or a combination of computer software and electronic hardware. Whether these functions are performed in hardware or software depends on the specific application and design constraints of the technical solutions. The professionals may use different methods to implement the described functions for each specific application, and such implementations shall not be considered as going beyond the scope of the disclosure.

Those skilled in the art may clearly understand that, for the specific working processes of the systems, devices, and units described above, reference may be made to the corresponding processes in the aforementioned method embodiments, which will not be repeated herein for convenience and conciseness of the description.

In several embodiments provided in the disclosure, it is to be understood that the disclosed systems, devices, and methods may be implemented in other ways. For example, the device embodiments described above are only schematic. For example, the partition of the unit is only a kind of logical functional partition, and other partition manners may be adopted during practical implementation. For example, multiple units or components may be combined or integrated into another system, or some features may be omitted or not implemented. In addition, coupling or direct coupling or communication connection between various displayed or discussed components may be indirect coupling or communication connection, implemented through some interfaces, devices or units, and may be an electrical or mechanical connection or in other forms.

The units described as separate components may or may not be physically separate, and the components displayed as units may or may not be physical units, that is, may be located in one place or be distributed to multiple network units. Part or all of the units may be selected based on the actual needs to achieve the purpose of the solution of the present embodiment.

Moreover, various functional units in the embodiments of the disclosure may be integrated into one processing unit, or they may be physically exist separately as individual units, or two or more units may be integrated into one unit.

The functions may be stored in a computer readable storage medium if implemented in the form of software functional units and sold or used as a standalone product. Based on such understanding, the essential part of the technical solutions of the disclosure or a part of the technical solutions that makes contributions over the related art or the part of the technical solutions may be embodied in a form of a software product. The software product is stored in a storage medium and includes instructions which cause a computer device (which may be a personal computer, a server, or a network device, etc.) to perform all or part of the operations in the methods described in various embodiments of the disclosure. The foregoing storage medium includes various media capable of storing program codes, such as a USB disk, a mobile hard disk, an ROM, an RAM, a magnetic disk, an optical disk, or the like.

The foregoing are only the specific implementations of the disclosure; however, the scope of protection of the disclosure is not limited thereto. Variations or replacements which can be readily conceived by those skilled in the art within the technical scope disclosed by the disclosure shall fall within the scope of protection of the disclosure. Therefore, the scope of protection of the disclosure shall be determined by the scope of protection of the claims.

**Claims**

1. A random access method, comprising:
receiving, by a terminal, a first signal from a network device, and transmitting, based on the first signal, a second signal which is a back scattered signal of the first signal, wherein the second signal carries a first sequence and/or a first terminal identifier, the first terminal identifier is an identifier of the terminal, and the first sequence and/or the first terminal identifier is used for random access procedure of the terminal.

2. The method of claim 1, wherein the first signal is a periodic signal.

3. The method of claim 1 or 2, wherein for a case where the second signal carries the first terminal identifier, the method further comprises:

when the terminal receives a first trigger signal carrying the first terminal identifier from the network device, determining that the random access procedure is successful, and/or transmitting uplink data based on the first trigger signal, wherein a signal carrying the uplink data is a back scattered signal of the first trigger signal;
when the terminal does not receive the first trigger signal carrying the first terminal identifier from the network device, determining that the random access procedure fails, and/or performing again the random access procedure.

4. The method of claim 1 or 2, wherein for a case where the second signal carries the first sequence, the method further comprises:

when the terminal receives a second trigger signal carrying the first sequence or a first sequence index from the network device, transmitting, by the terminal based on the second trigger signal, a third signal which is a back scattered signal of the second trigger signal, wherein the third signal carries the first terminal identifier, and the first sequence index is an index of the first sequence;
when the terminal receives a third trigger signal carrying the first terminal identifier from the network device, determining that the random access procedure is successful, and/or transmitting uplink data based on the third trigger signal, wherein a signal carrying the uplink data is a backscattered signal of the third trigger signal.

5. The method of claim 4, further comprising:
when the terminal does not receive the third trigger signal carrying the first terminal identifier from the network device, determining that the random access procedure fails, and/or performing again the random access procedure.

6. The method of claim 4, further comprising:
when the terminal does not receive the second trigger signal carrying the first sequence or the first sequence index from the network device, determining that the random access procedure fails, and/or performing again the random access procedure.

7. The method of claim 1 or 2, wherein for a case where the second signal carries the first sequence and the first terminal identifier, the method further comprises:

when the terminal receives a first trigger signal carrying the first terminal identifier from the network device, determining that the random access procedure is successful, and/or transmitting uplink data based on the first trigger signal, wherein a signal carrying the uplink data is a back scattered signal of the first trigger signal; when the terminal receives a second trigger signal carrying the first sequence or a first sequence index from the network device, transmitting, by the terminal based on the second trigger signal, a third signal which is a back scattered signal of the second trigger signal, wherein the third signal carries the first terminal identifier, the first sequence index is an index of the first sequence; when the terminal receives a third trigger signal carrying the first terminal identifier from the network device, determining that the random access procedure is successful, and/or transmitting uplink data based on the third trigger signal, wherein a signal carrying the uplink data is a back scattered signal of the third trigger signal.

8. The method of claim 7, further comprising:
when the terminal does not receive the third trigger signal carrying the first terminal identifier from the network device, determining that the random access procedure fails, and/or performing again the random access procedure.

9. The method of claim 7, further comprising:
when the terminal does not receive the first trigger signal carrying the first terminal identifier from the network device and does not receive the second trigger signal carrying the first sequence or the first sequence index from the network device, determining that the random access procedure fails, and/or performing again the random access procedure.

10. The method of any one of claims 3, 5, 6, 8 or 9, wherein the performing again the random access procedure comprises:

retransmitting the second signal based on the first signal; or
transmitting the second signal based on the first signal of a next period.

11. The method of any one of claims 3, 5, 6, 8, 9 or 10, wherein random access resources used for performing again the random access procedure are reselected.

12. The method of any one of claims 3 or 7 to 9, wherein a timer corresponding to the first trigger signal is a first timer, and during operation of the first timer, the terminal listens to the first trigger signal and/or determines whether the first trigger signal is received.

13. The method of claim 12, wherein

a start time of the first timer is determined based on a time when the second signal is transmitted; or
the start time of the first timer is determined based on a time when a first reference timer expires, wherein a start time of the first reference timer is determined based on a time when the first signal is received or the time when the second signal is transmitted.

14. The method of claim 12 or 13, wherein the first timer is configured by a system broadcast message or by the first signal.

15. The method of any one of claims 3, 7 to 9 or 12 to 14, wherein

the first trigger signal is transmitted after the second signal is received by the network device; or
the first trigger signal is transmitted after a final back scattering occasion in a period.

16. The method of any one of claims 3, 7 to 9 or 12 to 15, wherein

the first trigger signal carries one terminal identifier; or
the first trigger signal carries a plurality of terminal identifiers.

17. The method of any one of claims 4 to 9, wherein a timer corresponding to the second trigger signal is a second timer, and during operation of the second timer, the terminal listens to the second trigger signal and/or determines whether the second trigger signal is received.

18. The method of claim 17, wherein

a start time of the second timer is determined based on a time when the second signal is transmitted; or
the start time of the second timer is determined based on a time when a first reference timer expires, wherein a start time of the first reference timer is determined based on a time when the first signal is received or the time when the second signal is transmitted.

19. The method of claim 17 or 18, wherein the second timer is configured by a system broadcast message or by the first signal.

20. The method of any one of claims 4 to 9 or 17 to 19, wherein

the second trigger signal is transmitted after the second signal is received by the network device; or
the second trigger signal is transmitted after a final back scattering occasion in a period.

21. The method of any one of claims 4 to 9 or 17 to 20, wherein

the second trigger signal carries one sequence or one sequence index; or
the second trigger signal carries a plurality of sequences or a plurality of sequence indexes.

22. The method of any one of claims 4 to 9, wherein a timer corresponding to the third trigger signal is a third timer, and during operation of the third timer, the terminal listens to the third trigger signal and/or determines whether the third trigger signal is received.

23. The method of claim 22, wherein

a start time of the third timer is determined based on a time when the third signal is transmitted; or
the start time of the third timer is determined based on a time when a second reference timer expires, wherein a start time of the second reference timer is determined based on a time when the second signal is received or the time when the third signal is transmitted.

24. The method of claim 22 or 23, wherein the third timer is configured by a system broadcast message or by the first signal or by the second trigger signal.

25. The method of any one of claims 4 to 9 or 22 to 24, wherein

the third trigger signal is transmitted after the third signal is received by the network device; or
the third trigger signal is transmitted after a final back scattering occasion in a period is determined.

26. The method of any one of claims 4 to 9 or 22 to 25, wherein

the third trigger signal carries one terminal identifier; or
the third trigger signal carries a plurality of terminal identifiers.

27. The method of any one of claims 1 to 26, further comprising:
acquiring, by the terminal, first configuration information, wherein the first configuration information is for configuring a back scattering occasion, and the back scattering occasion is for transmission of the back scattered signal.

28. The method of claim 27, wherein the first configuration information comprises at least one of:

first information, configured to indicate frequency domain information of the back scattering occasion;
second information, configured to indicate time domain information of the back scattering occasion;
third information, configured to indicate a total number of the back scattering occasions;
fourth information, configured to indicate a number of the back scattering occasions in a time domain dimension; or
fifth information, configured to indicate a number of the back scattering occasions in a frequency domain dimension.

29. The method of claim 28, wherein the first information comprises at least one of:

a first parameter, configured to indicate at least one frequency for the back scattering occasion; or
a second parameter, configured to indicate a reference frequency and at least one frequency offset, wherein the at least one frequency offset and the reference frequency are for determining the at least one frequency for the back scattering occasion.

30. The method of claim 28 or 29, wherein the second information comprises at least one of:

a third parameter, configured to indicate a time interval between the back scattering occasions; or
a fourth parameter, configured to indicate a starting time of the back scattering occasion or a time offset of the starting time of the back scattering occasion relative to a reference time.

31. The method of any one of claims 27 to 30, wherein

the back scattering occasions are numbered within a period in order of frequency domain followed by time domain; or
the back scattering occasions are numbered within a period in order of time domain followed by frequency domain.

32. The method of any one of claims 27 to 31, wherein the first configuration information is carried in a system broadcast message or in the first signal.

33. The method of any one of claims 27 to 32, wherein the first configuration information is for determining a plurality of back scattering occasions;
and the method further comprises:

selecting, by the terminal, a back scattering occasion randomly from the plurality of back scattering occasions, as the back scattering occasion for transmitting the back scattered signal; or
selecting, by the terminal based on the first terminal identifier, a back scattering occasion from the plurality of back scattering occasions, as the back scattering occasion for transmitting the back scattered signal.

34. The method of any one of claims 1 to 33, further comprising:
acquiring, by the terminal, second configuration information, wherein the second configuration information is for configuring a root sequence or a sequence list, and the root sequence is for generating the sequence list.

35. The method of claim 34, wherein

the root sequence or the sequence list is configured at a cell level; or
the root sequence or the sequence list is configured at a period level.

36. The method of claim 34 or 35, wherein the second configuration information is carried in a system broadcast message or in the first signal.

37. The method of any one of claims 34 to 36, further comprising:

selecting, by the terminal, a sequence randomly from the sequence list, as the first sequence; or
selecting, by the terminal based on the first terminal identifier, a sequence from the sequence list, as the first sequence.

38. The method of any one of claims 10, 15, 20, 25, 31 or 35, wherein the period is a period of the first signal.

39. The method of any one of claims 1 to 38, wherein the terminal is a zero power terminal, or a passive Internet of Things, IoT, terminal, or an ambient powered IoT terminal.

40. A random access method, comprising:
transmitting, by a network device, a first signal, and receiving, a second signal which is a back scattered signal of the first signal, from a terminal, wherein the second signal carries a first sequence and/or a first terminal identifier, the first terminal identifier is an identifier of the terminal, and the first sequence and/or the first terminal identifier is used for random access procedure of the terminal.

41. The method of claim 40, wherein the first signal is a periodic signal.

42. The method of claim 40 or 41, wherein for a case where the second signal carries the first terminal identifier, the method further comprises:
when the network device detects the first terminal identifier, transmitting, by the network device, a first trigger signal carrying the first terminal identifier.

43. The method of claim 42, further comprising:
receiving, by the network device, uplink data from the terminal, wherein a signal carrying the uplink data is a back scattered signal of the first trigger signal.

44. The method of claim 40 or 41, wherein for a case where the second signal carries the first sequence, the method further comprises:

when the network device detects the first sequence, transmitting, by the network device, a second trigger signal carrying the first sequence or a first sequence index, wherein the first sequence index is an index of the first sequence; receiving, by the network device, a third signal which is a back scattered signal of the second trigger signal, from the terminal, wherein the third signal carries the first terminal identifier; when the network device detects the first terminal identifier, transmitting, by the network device, a third trigger signal carrying the first terminal identifier.

45. The method of claim 44, further comprising:
receiving, by the network device, uplink data from the terminal, wherein a signal carrying the uplink data is a back scattered signal of the third trigger signal.

46. The method of claim 40 or 41, wherein for a case where the second signal carries the first sequence and the first terminal identifier, the method further comprises:

when the network device detects the first terminal identifier, transmitting, by the network device, a first trigger signal carrying the first terminal identifier, when the network device does not detect the first terminal identifier but detects the first sequence, transmitting, by the network device, a second trigger signal carrying the first sequence or a first sequence index, wherein the first sequence index is an index of the first sequence; receiving, by the network device, a third signal which is a back scattered signal of the second trigger signal, from the terminal, wherein the third signal carries the first terminal identifier; when the network device detects the first terminal identifier, transmitting, by the network device, a third trigger signal carrying the first terminal identifier.

47. The method of claim 46, further comprising:
receiving, by the network device, uplink data from the terminal, wherein a signal carrying the uplink data is a back scattered signal of the first trigger signal or a back scattered signal of the third trigger signal.

48. The method of any one of claims 42, 43, 46 or 47, wherein

the first trigger signal is transmitted after the second signal is received by the network device; or
the first trigger signal is transmitted after a final back scattering occasion in a period.

49. The method of any one of claims 42, 43 or 46 to 48, wherein

the first trigger signal carries one terminal identifier; or
the first trigger signal carries a plurality of terminal identifiers.

50. The method of any one of claims 44 to 47, wherein

the second trigger signal is transmitted after the second signal is received by the network device; or
the second trigger signal is transmitted after a final back scattering occasion in a period.

51. The method of any one of claims 44 to 47 or 50, wherein

the second trigger signal carries one sequence or one sequence index; or
the second trigger signal carries a plurality of sequences or a plurality of sequence indexes.

52. The method of any one of claims 44 to 47, wherein

the third trigger signal is transmitted after the third signal is received by the network device; or
the third trigger signal is transmitted after a final back scattering occasion in a period is determined.

53. The method of any one of claims 44 to 47 or 52, wherein

the third trigger signal carries one terminal identifier; or
the third trigger signal carries a plurality of terminal identifiers.

54. The method of any one of claims 40 to 53, further comprising:
transmitting, by the network device, first configuration information, wherein the first configuration information is for configuring a back scattering occasion, and the back scattering occasion is for transmission of the back scattered signal.

55. The method of claim 54, wherein the first configuration information comprises at least one of:

first information, configured to indicate frequency domain information of the back scattering occasion;
second information, configured to indicate time domain information of the back scattering occasion;
third information, configured to indicate a total number of the back scattering occasions;
fourth information, configured to indicate a number of the back scattering occasions in a time domain dimension; or
fifth information, configured to indicate a number of the back scattering occasions in a frequency domain dimension.

56. The method of claim 55, wherein the first information comprises at least one of:

a first parameter, configured to indicate at least one frequency for the back scattering occasion; or
a second parameter, configured to indicate a reference frequency and at least one frequency offset, wherein the at least one frequency offset and the reference frequency are for determining the at least one frequency for the back scattering occasion.

57. The method of claim 55 or 56, wherein the second information comprises at least one of:

a third parameter, configured to indicate a time interval between the back scattering occasions; or
a fourth parameter, configured to indicate a starting time of the back scattering occasion or a time offset of the starting time of the back scattering occasion relative to a reference time.

58. The method of any one of claims 54 to 57, wherein

the back scattering occasions are numbered within a period in order of frequency domain followed by time domain; or
the back scattering occasions are numbered within a period in order of time domain followed by frequency domain.

59. The method of any one of claims 54 to 58, wherein the first configuration information is carried in a system broadcast message or in the first signal.

60. The method of any one of claims 40 to 59, further comprising:
transmitting, by the network device, second configuration information, wherein the second configuration information is for configuring a root sequence or a sequence list, and the root sequence is for generating the sequence list.

61. The method of claim 60, wherein

the root sequence or the sequence list is configured at a cell level; or
the root sequence or the sequence list is configured at a period level.

62. The method of claim 60 or 61, wherein the second configuration information is carried in a system broadcast message or in the first signal.

63. The method of any one of claims 48, 50, 52, 58 or 61, wherein the period is a period of the first signal.

64. The method of any one of claims 40 to 63, wherein the terminal is a zero power terminal, or a passive Internet of Things, IoT, terminal, or an ambient powered IoT terminal.

65. A random access apparatus, applied to a terminal, the apparatus comprising:
a communication unit, configured to receive a first signal from a network device, and transmit, based on the first signal, a second signal which is a back scattered signal of the first signal, wherein the second signal carries a first sequence and/or a first terminal identifier, the first terminal identifier is an identifier of the terminal, and the first sequence and/or the first terminal identifier is used for random access procedure of the terminal.

66. A random access apparatus, applied to a network device, the apparatus comprising:
a communication unit, configured to transmit a first signal, and receive, a second signal which is a back scattered signal of the first signal, from a terminal, wherein the second signal carries a first sequence and/or a first terminal identifier, the first terminal identifier is an identifier of the terminal, and the first sequence and/or the first terminal identifier is used for random access procedure of the terminal.

67. A terminal, comprising: a processor and a memory, wherein the memory is configured to store a computer program, and the processor is configured to invoke and execute the computer program stored in the memory to cause the terminal to perform the method of any one of claims 1 to 39.

68. A network device, comprising: a processor and a memory, wherein the memory is configured to store a computer program, and the processor is configured to invoke and execute the computer program stored in the memory to cause the network device to perform the method of any one of claims 40 to 64.

69. A chip, comprising: a processor, configured to invoke and execute a computer program from a memory to cause a device on which the chip is mounted to perform the method of any one of claims 1 to 39 or the method of any one of claims 40 to 64.

70. A computer-readable storage medium having stored thereon a computer program that, when executed by a computer, causes the computer to perform the method of any one of claims 1 to 39 or the method of any one of claims 40 to 64.

71. A computer program product having stored therein computer program instructions that, when executed by a computer, cause the computer to perform the method of any one of claims 1 to 39 or the method of any one of claims 40 to 64.

72. A computer program that, when executed by a computer, causes the computer to perform the method of any one of claims 1 to 39 or the method of any one of claims 40 to 64.

FIG. 1

**FIG. 2**

**FIG. 3**

**FIG. 4**

1 0 1 1 0 0 1 0 1 0 0 1 0 1 1

**FIG. 5**

1 0 1 1 0 0 1 0 1 0 0 1 0 1 1

**FIG. 6**

1 0 1 1 0 0 1 0 1 0 0 1 0 1 1

**FIG. 7**

1 0 1 1 0 0 1 0 1 0 0 1 0 1 1

**FIG. 8**

1 0 1 1 0 0 1 0 1 0 0 1 0 1 1

**FIG. 9**

100

A network device transmits a first signal, and the terminal receives the first signal from the network device

100

The terminal transmits a second signal based on the first signal, the network device receives the second signal from the terminal, and the second signal is a back scattered signal of the first signal. The second signal carries a first sequence and/or a first terminal identifier, the first terminal identifier is an identifier of the terminal, and the first sequence and/or the first terminal identifier is used for random access procedure of the terminal

**FIG. 10**

| Tag | | Network device |
|---|---|---|

1101: Periodic signal

1102: Back scattered signal carrying tag ID

1103: Trigger signal carrying tag ID

**FIG. 11**

frequency

| ⊠ | ▦ | ☰ | ⫿⫿⫿ | Back scattering occasions in F2 |

| 4 | 5 | 6 | 7 |

| ⊠ | ▦ | ☰ | ⫿⫿⫿ | Back scattering occasions in F1 |

| 0 | 1 | 2 | 3 |

F0: Frequencies for periodic signal

Time

Periodic signal

**FIG. 12**

Option 1):    Option 2):
Periodic    Trigger signal    Trigger signal   Periodic    Periodic
signal    carrying tag ID   carrying tag ID   signal    signal

A back scattered signal
carrying the tag ID is
transmitted on a back
scattering occasion

Tag 1

t1
t2
t3
t4

A back scattered signal
carrying the tag ID is
transmitted on a back
scattering occasion

Tag n

t1
t2
t3
t4

**FIG. 13**

1401:Periodic signal

1402:Back scattered signal 1 carrying sequence

1403:Trigger signal 1 carrying sequence or sequence index

1404:Back scattered signal 2 carrying tag ID

1405:Trigger signal 2 carrying tag ID

**FIG. 14**

**FIG. 15**

FIG. 16

**FIG. 17**

Random access apparatus

Selection unit 1802

Communication unit 1801

**FIG. 18**

Random access apparatus

Communication unit 1901

**FIG. 19**

Communication device 2000

Memory 2020

Processor 2010

Transceiver 2030

**FIG. 20**

Chip 2100

Input
interface
2130

Processor
2110

Memory
2120

Output
interface
2140

**FIG. 21**

Communication system 2200

Terminal 2210

Network
device 2220

**FIG. 22**

## INTERNATIONAL SEARCH REPORT

| International application No. |
|---|
| **PCT/CN2022/136780** |

**A.    CLASSIFICATION OF SUBJECT MATTER**

H04L27/00(2006.01)i

According to International Patent Classification (IPC) or to both national classification and IPC

**B.    FIELDS SEARCHED**

Minimum documentation searched (classification system followed by classification symbols)

IPC: H04L,H04W

Documentation searched other than minimum documentation to the extent that such documents are included in the fields searched

Electronic data base consulted during the international search (name of data base and, where practicable, search terms used)

CNTXT; WPABS; ENTXT; DWPI; CJFD; VCN; 3GPP; IEEE: 终端, 零功耗, 无源, 随机接入, 广播, 配置, 周期, 反向散射, 时机, 频率, 偏置, 间隔, 起始时间, 携带, 标识, 标签, 序列, 索引, 触发, 定时器, UE, zero power, passive, random access, broadcast, configur+, period+, back scatter+, occasion, frequency, offset, gap, start time, carrier, ID, tag, sequence, index, trigger, timer

**C.    DOCUMENTS CONSIDERED TO BE RELEVANT**

| Category* | Citation of document, with indication, where appropriate, of the relevant passages | Relevant to claim No. |
|---|---|---|
| X | CN 112073082 A (CHENGDU HUAWEI TECHNOLOGIES CO., LTD.) 11 December 2020 (2020-12-11)<br>  see claims 1-46; description, paragraphs 0057-0192; and figures 3 and 7-8 | 1, 27-40, 54-72 |
| Y | CN 112073082 A (CHENGDU HUAWEI TECHNOLOGIES CO., LTD.) 11 December 2020 (2020-12-11)<br>  ditto | 2-26, 41-53 |
| Y | CN 113573409 A (HUAWEI TECHNOLOGIES CO., LTD.) 29 October 2021 (2021-10-29)<br>  see claims 1-30; description, paragraphs 0060-0137; and figure 7 | 2-26, 41-53 |
| A | WO 2021163971 A1 (GUANGDONG OPPO MOBILE TELECOMMUNICATIONS CORP., LTD.) 26 August 2021 (2021-08-26)<br>  see entire document | 1-72 |
| A | CN 114745044 A (CHINA ACADEMY OF INFORMATION AND COMMUNICATIONS TECHNOLOGY) 12 July 2022 (2022-07-12)<br>  see entire document | 1-72 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 September 2023** | **05 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 633 093 A1**

## INTERNATIONAL SEARCH REPORT

| International application No. |
|---|
| **PCT/CN2022/136780** |

### C.    DOCUMENTS CONSIDERED TO BE RELEVANT

| Category* | Citation of document, with indication, where appropriate, of the relevant passages | Relevant to claim No. |
|---|---|---|
| A | WO 2022000477 A1 (GUANGDONG OPPO MOBILE TELECOMMUNICATIONS CORP., LTD.) 06 January 2022 (2022-01-06) see entire document | 1-72 |

Form PCT/ISA/210 (second sheet) (July 2022)

41

**INTERNATIONAL SEARCH REPORT**
Information on patent family members

International application No.

**PCT/CN2022/136780**

| Patent document cited in search report | | | Publication date (day/month/year) | Patent family member(s) | | | Publication date (day/month/year) |
|---|---|---|---|---|---|---|---|
| CN | 112073082 | A | 11 December 2020 | None | | | |
| CN | 113573409 | A | 29 October 2021 | None | | | |
| WO | 2021163971 | A1 | 26 August 2021 | EP | 4102728 | A1 | 14 December 2022 |
| | | | | EP | 4102728 | A4 | 01 February 2023 |
| | | | | US | 2022386348 | A1 | 01 December 2022 |
| CN | 114745044 | A | 12 July 2022 | None | | | |
| WO | 2022000477 | A1 | 06 January 2022 | None | | | |

Form PCT/ISA/210 (patent family annex) (July 2022)